(19)

Europäisches
Patentamt

European
Patent Office

Office européen
des brevets

(11) **EP 3 511 109 A1**

(12) **EUROPEAN PATENT APPLICATION**
published in accordance with Art. 153(4) EPC

(43) Date of publication:
**17.07.2019 Bulletin 2019/29**

(21) Application number: **17848817.7**

(22) Date of filing: **06.09.2017**

(51) Int Cl.:
**B23K 35/368** *(2006.01)*    **B23K 35/30** *(2006.01)*

(86) International application number:
**PCT/JP2017/032176**

(87) International publication number:
**WO 2018/047879 (15.03.2018 Gazette 2018/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **06.09.2016   JP 2016174094**

(71) Applicant: **Kabushiki Kaisha Kobe Seiko Sho
(Kobe Steel, Ltd.)
Kobe-shi, Hyogo 651-8585 (JP)**

(72) Inventors:
  • **NAKO Hidenori
    Hyogo 651-2271 (JP)**

  • **SHIMAMOTO Masaki
    Hyogo 651-2271 (JP)**
  • **OKAZAKI Yoshitomi
    Hyogo 651-2271 (JP)**
  • **YAMAKAMI Masafumi
    Tokyo 141-8688 (JP)**
  • **ISONO Shinya
    Kanagawa 251-8551 (JP)**
  • **ISHIZAKI Keito
    Kanagawa 251-8551 (JP)**

(74) Representative: **Müller-Boré & Partner
Patentanwälte PartG mbB
Friedenheimer Brücke 21
80639 München (DE)**

(54) **FLUX CORED WIRE FOR GAS SHIELD ARC WELDING AND WELDING METAL**

(57)    The present invention pertains to a flux cored wire for gas shield arc welding that: contains, based on the total mass of wire, at least 80% by mass Fe and at least one among 0.03%-0.12% by mass C, 0.20%-0.70% by mass Si in terms of Si in an Si alloy and an Si compound, 1.0%-4.0% by mass Mn, 2.4%-4.5% Ti in terms of Ti in a Ti alloy and a Ti compound, 0.005%-0.050% by mass Al, 0.03%-1.0% by mass Ca, 0.30%-3.50% by mass Ni, and 0.0008%-0.012% by mass B; and fulfills (Ti + Mn + Al + Ca)/Si ≥ 12 and Ca/Si: 0.07-0.35.

EP 3 511 109 A1

**Description**

TECHNICAL FIELD

The present invention relates to a flux-cored wire for gas-shielded arc welding that enables to obtain a weld metal having good low-temperature toughness, and the weld metal.

BACKGROUND ART

In recent years, energy development is expanding into colder regions and waters, and a cryogenic steel has been used for a structure in such cold regions and cold waters. However, for the structure in these cold regions and cold waters, a structure design in consideration of weather conditions in the regions and waters where the structure operates has been executed in addition to the conventional requirement for low-temperature toughness, and a steel material having higher toughness is demanded. Furthermore, for the purpose of achieving high efficiency and deskilling of welding, a requirement for application of a flux-cored wire to welding of this kind of cryogenic steel is increasing.

Based on such background, Patent Literature 1 discloses a technique that the toughness at low temperatures is enhanced by controlling the chemical components and the amount of solute Ti of the weld metal. In the technique described in Patent Literature 1, attention is focused on the formation of acicular ferrite inside prior $\gamma$ grains.

In addition, Patent Literature 2 discloses a flux-cored wire for gas-shielded arc welding for a high tensile steel having a tensile strength of 680 N/mm$^2$ class or more. In the technique described in Patent Literature 2, strength corresponding to the base metal strength and good toughness are ensured in a wide range of use from small heat input to large heat input by specifying appropriate ranges for the contents of C, Si, Mn, P, S, Ni, Cr and Mo based on the total weight of wire and specifying the addition amount of Ta, and furthermore, the weight ratio of metal powders in the flux is specified for enhancing the operating efficiency.

CITATION LIST

PATENT LITERATURE

Patent Literature 1: JP-A-2000-263283
Patent Literature 2: JP-A-H03-294093

SUMMARY OF INVENTION

TECHNICAL PROBLEM

However, in Patent Literature 1, toughness is enhanced by reducing formation of acicular ferrite inside the prior $\gamma$ grains, but attention is not paid to the viewpoint of alleviating stress concentration on inclusions or the viewpoint of reducing the brittle fracture rate of the weld metal. Accordingly, the toughness of the weld metal when welding a cryogenic steel is not sufficient.

In Patent Literature 2, attention is not paid to the viewpoint of alleviating stress concentration on inclusions or the viewpoint of reducing the brittle fracture rate of the weld metal. Accordingly, the toughness of the weld metal when welding a cryogenic steel is not sufficient.

In addition, a welding wire is required to satisfy a general requirement that the welding workability is good.

The present invention has been made in consideration of these problems, and a first object of the present invention is to provide a flux-cored wire enabling to obtain a weld metal having in particular good low-temperature toughness when assembling a structure by gas-shielded arc welding of a cryogenic steel and achieve good welding workability, and to provide the weld metal. A second object of the present invention is to provide a flux-cored wire enabling to obtain a weld metal having both good low-temperature toughness and high strength when assembling a structure by gas-shielded arc welding of a cryogenic steel and achieve good welding workability, and to provide the weld metal.

SOLUTION TO PROBLEM

As described above, in Patent Literatures 1 and 2, the brittle fracture rate is not studied. Here, the brittle fracture rate indicates a percentage of brittle fracture occurring when a load is applied in a Charpy impact test. In a region where brittle fracture occurred, the energy absorbed until reaching fracture by a steel material is extremely reduced, and the fracture easily proceeds. Accordingly, in particular for inhibiting the fracture at low temperatures, a requirement to not only improve an absorption energy at low temperatures in a general Charpy impact test but also prevent the formation of a brittle fracture surface is considered to be very important.

In addition, as described above, energy development is expanded into colder regions and waters and as for a structure in such cold regions and cold waters, the low-temperature toughness is required to be improved, but it is important particularly for a structure used at low temperatures to avoid an unstable fracture involving the brittle fracture and more increase the safety of the structure used in a low-temperature environment. Here, in a low alloy steel weld metal formed by gas-shielded arc welding, a large amount of oxygen is contained, and most thereof is present as an oxide-based inclusion in the weld metal. At the time of fracture of the weld metal, stress concentration occurs around the oxide-based inclusion, and particularly, in a low-temperature environment, the brittle fracture is expected to be promoted by stress concentration around the oxide-based inclusion. Therefore, in order to more increase the safety of a structure used at low temperatures, the brittle fracture needs to be avoided, and it is considered to be important to alleviate stress concentration on an oxide-based inclusion.

Based on these considerations, the present inventors have studied a technique for alleviating stress concentration on oxide-based inclusions. As a result, it has been newly found that reducing the glass phase present in an oxide-based inclusion is effective. The oxide-based inclusion is a composite phase composed of a glass phase and other various crystal phases. Here, the Young's modulus of the glass phase is low compared with the base metal phase of the weld metal and since stress is likely to concentrate on the glass phase having a low Young's modulus, compared with the base metal phase, when many glass phases are present in the oxide-based inclusions, the brittle fracture readily occurs.

Accordingly, the present inventors have studied a means for reducing the glass phase in the oxide-based inclusion so as to reduce the brittle fracture. In addition, taking note of the fact that the glass phase mainly includes $SiO_2$, the present inventors have further studied reducing the amount of $SiO_2$ in the oxide-based inclusion of the weld metal and have conceived an idea of controlling a ratio between a deoxidizing element (Mn, Ti, Al, Ca) contained in the weld wire and Si so as to reduce the amount of $SiO_2$ in the oxide-based inclusion. On the other hand, the Si source in the welding wire plays an important role in ensuring the welding workability and therefore, in view of welding workability, a certain amount of Si source is preferably contained in the welding wire. The present inventors have therefore made many intensive studies on a technique for satisfying both the inhibition of brittle fracture and the welding workability and found that when the ratio Ca/Si in the welding wire is controlled, the ratio $CaO/SiO_2$ in an oxide-based inclusion of the weld metal can be controlled and the glass phase mainly includes $SiO_2$ in the oxide-based inclusion can be reduced. It has been found that according to the finding above, the brittle fracture rate at low temperatures as well as the absorption energy at low temperatures in a Charpy impact test of the weld metal can be improved, and particularly good low-temperature toughness can be obtained while good welding workability is satisfied. It has also been found that in the case of incorporating a predetermined amount of Mo into the wire, not only a weld metal having both good low-temperature toughness and high strength can be obtained but also good welding workability can be satisfied.

More specifically, an embodiment capable of achieving the first object (hereinafter, sometimes referred to as first embodiment) relates to a flux-cored wire for gas-shielded arc welding, containing, based on total mass of the wire:

C: from 0.03 to 0.12 mass%;
Si in terms of Si in Si alloy and Si compound: from 0.20 to 0.70 mass%;
Mn: from 1.0 to 4.0 mass%;
Ti in terms of Ti in Ti alloy and Ti compound: from 2.4 to 4.5 mass%;
Al: from 0.005 to 0.050 mass%;
Ca: from 0.03 to 1.0 mass%;
at least one of Ni: from 0.30 to 3.50 mass% and B: from 0.0008 to 0.012 mass%; and
Fe: 80 mass% or more, and
satisfying:

$(Ti+Mn+Al+Ca)/Si \geq 12$; and
Ca/Si: from 0.07 to 0.35.

The flux-cored wire for gas-shielded arc welding above may further contain, based on the total mass of the wire: $ZrO_2$: from 0.02 to 0.50 mass%; and $Al_2O_3$: from 0.02 to 0.80 mass%.

The flux-cored wire for gas-shielded arc welding above may further contain at least one member selected from the group consisting of, based on the total mass of the wire: Cu: 0.40 mass% or less; Cr: 1.0 mass% or less; Mo: 0.35 mass% or less; Nb: 0.030 mass% or less; and V: 0.050 mass% or less.

The flux-cored wire for gas-shielded arc welding above may further contain, based on the total mass of the wire: a total of Li, Na and K: 1.0 mass% or less.

The flux-cored wire for gas-shielded arc welding above may further contain, based on the total mass of the wire: Mg: 1.0 mass% or less.

The flux-cored wire for gas-shielded arc welding above may further contain, based on the total mass of the wire: F: 1.0 mass% or less.

One preferred embodiment of the flux-cored wire for gas-shielded arc welding above satisfies:

Mn: from 1.1 to 3.4 mass%; and
Ti in terms of Ti in Ti alloy and Ti compound: from 2.4 to 4.0 mass%, and
containing both of Ni: from 1.00 to 3.50 mass% and B: from 0.0008 to 0.012 mass%.

This embodiment also relates to a weld metal containing:

C: from 0.04 to 0.12 mass%;
Si: from 0.10 to 0.50 mass%;
Mn: from 0.80 to 3.00 mass%;
Ti: from 0.030 to 0.100 mass%;
Al: from 0.002 to 0.010 mass%;
O: from 0.030 to 0.070 mass%;
N: more than 0 and 0.01 mass% or less;
Ca: from 0.0003 to 0.01 mass%; and
at least one of Ni: from 0.30 to 3.50 mass% and B: from 0.0005 to 0.0070 mass%,
with the remainder consisting of Fe and inevitable impurities,
wherein an average composition of oxide-based inclusions having a minor diameter of 1 $\mu$m or more contained in the weld metal satisfies, by mass%, the following requirements (1) to (3):

$$Al_2O_3+SiO_2+MnO+TiO_2+CaO \geq 70\% \qquad (1)$$

$$(TiO_2+MnO+Al_2O_3+CaO)/SiO_2 \geq 5 \qquad (2)$$

$$CaO/SiO_2: \text{from } 0.20 \text{ to } 3.0 \qquad (3)$$

The weld metal above may further contain at least one member selected from the group consisting of: Cu: 0.40 mass% or less; Cr: 1.0 mass% or less; Mo: 0.35 mass% or less; Nb: 0.020 mass% or less; and V: 0.050 mass% or less.

One preferred embodiment of the weld metal above is a weld metal satisfying:

Si: from 0.20 to 0.50 mass%;
Mn: from 1.00 to 2.40 mass%; and
Ti: from 0.030 to 0.090 mass%, and
containing both of Ni: from 1.00 to 3.50 mass% and B: from 0.0005 to 0.0070 mass%,
wherein the average composition of oxide-based inclusions having a minor diameter of 1 $\mu$m or more contained in the weld metal satisfies the following requirement (3'):

$$CaO/SiO_2: \text{from } 0.50 \text{ to } 3.0 \qquad (3')$$

and
wherein a rate of acicular ferrite formation defined by the following formula is 15% or more:

$$\text{Rate of acicular ferrite formation (\%)} = (\text{number of inclusions acting as a start point of acicular ferrite/number of all inclusions}) \times 100$$

In addition, another embodiment capable of achieving the second object (hereinafter, sometimes referred to as second embodiment) relates to a flux-cored wire for gas-shielded arc welding, containing, based on total mass of the wire:

C: from 0.04 to 0.12 mass%;

Si in terms of Si in Si alloy and Si compound: from 0.10 to 0.60 mass%;
Mn: from 1.5 to 3.4 mass%;
Ti in terms of Ti in Ti alloy and Ti compound: from 2.4 to 4.0 mass%;
Al: from 0.005 to 0.050 mass%;
Ca: from 0.03 to 1.0 mass%;
Ni: from 1.00 to 3.50 mass%;
Mo: from 0.35 to 1.40 mass%; and
Fe: 80 mass% or more, and
satisfying:

$(Ti+Mn+Al+Ca)/Si \geq 12$; and
Ca/Si: from 0.07 to 0.35.

The flux-cored wire for gas-shielded arc welding above may further contain, based on the total mass of the wire, $ZrO_2$: from 0.02 to 0.50 mass% and $Al_2O_3$: from 0.02 to 0.80 mass%.

The flux-cored wire for gas-shielded arc welding above may further contain at least one member selected from the group consisting of, based on the total mass of the wire: Cu: 0.40 mass% or less; Cr: 1.0 mass% or less; Nb: 0.030 mass% or less; V: 0.050 mass% or less; and B: 0.010 mass% or less.

The flux-cored wire for gas-shielded arc welding above may further contain, based on the total mass of the wire: a total of Li, Na and K: 1.0 mass% or less.

The flux-cored wire for gas-shielded arc welding above may further contain, based on the total mass of the wire: Mg: 1.0 mass% or less.

The flux-cored wire for gas-shielded arc welding above may further contain, based on the total mass of the wire: F: 1.0 mass% or less.

This embodiment also relates to a weld metal containing:

C: from 0.05 to 0.12 mass%;
Si: from 0.05 to 0.40 mass%;
Mn: from 1.4 to 2.4 mass%;
Ti: from 0.030 to 0.090 mass%;
Al: from 0.002 to 0.010 mass%;
O: from 0.030 to 0.070 mass%;
N: more than 0 and 0.01 mass% or less;
Ca: from 0.0003 to 0.01 mass%;
Ni: from 1.00 to 3.50 mass%; and
Mo: from 0.35 to 1.40 mass%,
with the remainder consisting of Fe and inevitable impurities,
wherein the average composition of oxide-based inclusions having a minor diameter of 1 $\mu$m or more contained in the weld metal satisfies, by mass%, the following requirements (1) to (3'):

$$Al_2O_3+SiO_2+MnO+TiO_2+CaO \geq 70\% \qquad (1)$$

$$(TiO_2+MnO+Al_2O_3+CaO)/SiO_2 \geq 5 \qquad (2)$$

$$CaO/SiO_2: \text{ from } 0.50 \text{ to } 3.0 \qquad (3')$$

and
wherein a rate of acicular ferrite formation defined by the following formula is 15% or more:

$$\text{Rate of acicular ferrite formation (\%)} = (\text{number of inclusions acting as a start point of acicular ferrite/number of all inclusions}) \times 100$$

The weld metal above may further contain at least one member selected from the group consisting of: Cu: 0.40 mass% or less; Cr: 1.0 mass% or less; Nb: 0.020 mass% or less; V: 0.050 mass% or less; and B: 0.0050 mass% or less.

ADVANTAGEOUS EFFECTS OF INVENTION

Low-temperature toughness that has not been conventionally obtained as a weld metal can be obtained by controlling the composition of the weld metal and the composition of an oxide-based inclusion. The above-described weld metal having excellent toughness at low temperatures can be obtained by properly controlling the composition of the flux-cored wire. Therefore, the safety of a structure used in a low-temperature environment can be more increased. In addition, not only the low-temperature toughness is excellent but also good welding workability can be satisfied. Furthermore, in the case of incorporating a predetermined amount of Mo into the wire, not only a weld metal having both good low-temperature toughness and high strength can be obtained but also good welding workability can be satisfied.

DESCRIPTION OF EMBODIMENTS

The embodiments for carrying out the present invention are described in detail below. However, the present invention is not limited to the following embodiments.

[First Embodiment]

<Flux-Cored Wire for Gas-Shielded Arc Welding>

The flux-cored wire for gas-shielded arc welding (hereinafter, sometimes simply referred to as "flux-cored wire" or "wire") of this embodiment contains, based on total mass of the wire: C: from 0.03 to 0.12 mass%; Si in terms of Si in Si alloy and Si compound: from 0.20 to 0.70 mass%; Mn: from 1.0 to 4.0 mass%; Ti in terms of Ti in Ti alloy and Ti compound: from 2.4 to 4.5 mass%; Al: from 0.005 to 0.050 mass%; Ca: from 0.03 to 1.0 mass%; at least one of Ni: from 0.30 to 3.50 mass% and B: from 0.0008 to 0.012 mass%; and Fe: 80 mass% or more, and satisfying: $(Ti+Mn+Al+Ca)/Si \geq 12$; and Ca/Si: from 0.07 to 0.35.

The reason for numerical limitation on the amount of each component contained in the flux-cored wire for gas-shielded arc welding of this embodiment is described below. In the following, the amount of each component in the flux-cored wire for gas-shielded arc welding is a content based on the total mass of the flux-cored wire for gas-shielded arc welding, i.e., a content based on the total mass of the wire.

In addition, in the present description, the percentage on a mass basis (mass%) has the same meaning as the percentage on a weight basis (wt%). Furthermore, the numerical range expressed using "to" means to be equal to or more than the lower limit and equal to or less than the upper limit.

(C: from 0.03 to 0.12 mass%)

C is an element effective in enhancing the strength of the weld metal. However, if the amount of C is excessive, the strength may increase excessively, causing deterioration of the toughness. On the other hand, if the amount of C is too small, a lack of strength may be caused and coarse grain boundary ferrite, which adversely affects the toughness, is formed.

From these viewpoints, the C amount in the wire is 0.12% or less, preferably 0.09% or less, more preferably 0.08% or less. In addition, the C amount in the wire is 0.03% or more, preferably 0.04% or more, more preferably 0.05% or more.

(Si in terms of Si in Si alloy and Si compound: from 0.20 to 0.70 mass%)

Si is an element acting as a deoxidizer and is also important in controlling the glass phase of an oxide-based inclusion. However, if the amount of Si is excessive, the glass phase of an oxide-based inclusion may increase, leading to a reduction in the toughness. On the other hand, if the amount of Si is too small, a blowhole may be formed due to insufficient deoxidation, or the welding workability may be reduced.

From these viewpoints, the Si amount in the wire is, in terms of Si in an Si alloy and an Si compound, 0.70% or less, preferably 0.60% or less, more preferably 0.50% or less. In addition, the Si amount in the wire is, in terms of Si in an Si alloy and an Si compound, 0.20% or more, preferably 0.25% or more, more preferably 0.30% or more.

Here, examples of the Si source also include potash glass and soda glass, besides $SiO_2$, $K_2SiF_6$, etc.

(Mn: from 1.0 to 4.0 mass%)

Mn acts as a deoxidizer and is an element affecting the strength and toughness. However, if the amount of Mn is excessive, the strength may increase excessively and the hardenability during quenching may increase excessively, leading to a reduction in the toughness. On the other hand, if the amount of Mn is too small, a lack of strength may be caused and coarse grain boundary ferrite, which adversely affects the toughness, is formed.

From these viewpoints, the Mn amount in the wire is 4.0% or less, preferably 3.0% or less, more preferably 2.7% or less. In addition, the Mn amount in the wire is 1.0% or more, preferably 2.3% or more, more preferably 2.6% or more.

(Ti in terms of Ti in Ti alloy and Ti compound: from 2.4 to 4.5 mass%)

Ti is an element acting as a deoxidizer, and an oxide-based inclusion thereof acts as a nucleus of acicular ferrite. However, if the amount of Ti is excessive, an excess of solute Ti may be formed and not only the strength may increase excessively but also the toughness may deteriorate. On the other hand, if the amount of Ti is too small, ferrite may be coarsened, causing deterioration of the toughness.

From these viewpoints, the Ti amount in the wire is, in terms of Ti in Ti alloy and Ti compound, 4.5% or less, preferably 3.6% or less, more preferably 3.2% or less. In addition, the Ti amount in the wire is, in terms of Ti in Ti alloy and Ti compound, 2.4% or more, preferably 2.6% or more, more preferably 2.8% or more.

Here, examples of the Ti source include $TiO_2$, etc.

(Al: from 0.005 to 0.050 mass%)

Al is an element acting as a deoxidizer. However, if the amount of Al is excessive, nucleation of acicular ferrite may be prevented, causing deterioration of the toughness. On the other hand, if the amount of Al is too small, a blowhole may be formed due to insufficient deoxidation.

From these viewpoints, the Al amount in the wire is 0.050% or less, preferably 0.048% or less, more preferably 0.045% or less. In addition, the Al amount in the wire is 0.005% or more, preferably 0.008% or more, more preferably 0.015% or more.

(Ca: from 0.03 to 1.0 mass%)

Ca is an element acting as a deoxidizer. However, if the amount of Ca is excessive, nucleation of acicular ferrite may be prevented, causing deterioration of the toughness. On the other hand, if the amount of Ca is too small, the glass phase of an oxide-based inclusion in the weld metal may increase, leading to a reduction in the toughness.

From these viewpoints, the Ca amount in the wire is 0.03% or more, preferably 0.04% or more, more preferably 0.05% or more. In addition, the Ca amount in the wire is preferably 1.0% or less, more preferably 0.5% or less, still more preferably 0.3% or less.

(At least one of Ni: from 0.30 to 3.50 mass% and B: from 0.0008 to 0.012 mass%)

Ni is an element having an action of enhancing the toughness of the weld metal and also has an action of promoting acicular ferrite formation by retarding the formation of a grain boundary bainite structure competing with acicular ferrite. However, if the amount of Ni is excessive, high-temperature cracking may occur. In addition, the amount of martensite formed may increase to raise the strength and in turn, the Charpy impact absorption energy may decrease. On the other hand, if the amount of Ni is too small, the toughness may deteriorate.

Similarly, B is an element having an action of enhancing the toughness of the weld metal and contributes to a reduction in the brittle fracture rate at low temperatures by reducing grain boundary ferrite, which adversely affects the toughness. However, if the amount of B is excessive, high-temperature cracking may occur. On the other hand, if the amount of B is too small, the toughness may deteriorate.

The wire of this embodiment contains at least one of Ni and B in a specific amount range.

More specifically, in the case of containing Ni, from the above-described viewpoint, the Ni amount in the wire is 3.50% or less, preferably 3.00% or less, more preferably 2.50% or less. In addition, the Ni amount in the wire is 0.30% or more, preferably 0.50% or more, more preferably 1.50% or more.

In the case of containing B, from the above-described viewpoint, the B amount in the wire is 0.012% or less, preferably 0.010% or less, more preferably 0.007% or less. In addition, the B amount in the wire is 0.0008% or more, preferably 0.0010% or more, more preferably 0.0015% or more.

((Ti+Mn+Al+Ca)/Si≥12)

(Ti+Mn+Al+Ca)/Si is a parameter indicative of the amount of the glass phase in an oxide-based inclusion of the weld metal. Since the glass phase in an oxide-based inclusion mainly includes $SiO_2$, when the amount of $SiO_2$ in

an oxide-based inclusion of the weld metal is reduced, the proportion of the glass phase having a low Young's modulus in an oxide-based inclusion can be reduced, and occurrence of brittle fracture can be prevented.

From these viewpoints, in this embodiment, the ratio ((Ti+Mn+Al+Ca)/Si) of the total amount of deoxidizing elements (Mn, Ti, Al, and Ca) contained in the wire to the Si amount is 12 or more, preferably 14 or more, more preferably 16 or more. On the other hand, the upper limit of (Ti+Mn+Al+Ca)/Si is not particularly limited but the ratio is preferably 47.75 or less, more preferably 45 or less.

(Ca/Si: from 0.07 to 0.35)

Ca/Si is a parameter indicative of the amount of the glass phase in an oxide-based inclusion of the weld metal. The Si source in the welding wire plays an important role in ensuring the welding workability and therefore, in view of welding workability, a certain amount of Si source is preferably contained in the welding wire. On the other hand, if many glass phases mainly including $SiO_2$ are present in an oxide-based inclusion in the weld metal, brittle fracture is likely to occur. Accordingly, in this embodiment, paying attention to Ca, which is a deoxidizing element, the ratio $CaO/SiO_2$ in an oxide-based inclusion of the weld metal is controlled by controlling the ratio Ca/Si in the wire, and the glass phase mainly including $SiO_2$ in an oxide-based inclusion is thereby reduced.

Here, if Ca/Si is too large, nucleation of acicular ferrite may be inhibited, causing deterioration of the toughness. Accordingly, in the wire of this embodiment, Ca/Si is 0.35 or less, preferably 0.29 or less, more preferably 0.25 or less. On the other hand, if Ca/Si is too small, the amount of the glass phase in an oxide-based inclusion may increase, causing deterioration of the toughness. For this reason, in the wire of this embodiment, Ca/Si is 0.07 or more, preferably 0.09 or more, more preferably 0.12 or more.

(Fe and inevitable impurities)

The remainder of the flux-cored wire of this embodiment consists of Fe and inevitable impurities.

Fe of the remainder includes Fe constituting the outer shell, an iron powder added to the flux, and Fe of an alloy powder. The flux-cored wire of this embodiment contains Fe in an amount of 80 mass% or more, preferably 82 mass% or more, more preferably 84 mass% or more.

The upper limit of the amount of Fe is not particularly limited but the amount of Fe is, for example, 96 mass% or less in relation to other component composition.

Examples of the inevitable impurities of the remainder include P, S, Sn, Pb, Sb, etc.

Furthermore, in the flux-cored wire of this embodiment, an alloy element other than the above-described elements, a slag forming agent, an arc stabilizer, etc. may be added in addition to each of the components described above, as long as the effects of the present invention are not inhibited. In the case where each element is added as an oxide or a nitride, the remainder of the flux-cored wire of this embodiment contains O or N as well.

Furthermore, in addition to each of the components described above, the flux-cored wire of this embodiment may further contain a predetermined amount of at least one of the following components.

(Cu: 0.40 mass% or less)

Cu is an element effective in ensuring the strength of the weld metal. However, if the amount of Cu is excessive, the strength may increase excessively, causing deterioration of the toughness.

From these viewpoints, in the case of incorporating Cu into the wire, it is sufficient as long as the Cu amount in the wire is more than 0%, but the amount is preferably 0.01% or more, more preferably 0.05% or more, still more preferably 0.10% or more. In addition, the Cu amount in the wire is preferably 0.40% or less, more preferably 0.30% or less, still more preferably 0.25% or less.

(Cr: 1.0 mass% or less)

Cr is an element effective in ensuring the strength of the weld metal. However, if the amount of Cr is excessive, the strength may increase excessively, causing deterioration of the toughness.

From these viewpoints, in the case of incorporating Cr into the wire, it is sufficient as long as the Cr amount in the wire is more than 0%, but the amount is preferably 0.01% or more, more preferably 0.05% or more, still more preferably 0.10% or more. In addition, the Cr amount in the wire is preferably 1.0% or less, more preferably 0.8% or less, still more preferably 0.6% or less.

(Mo: 0.35 mass% or less)

Mo is an element effective in ensuring the strength of the weld metal. However, if the amount of Mo is excessive, the strength may increase excessively, causing deterioration of the toughness.

From these viewpoints, in the case of incorporating Mo into the wire, it is sufficient as long as the Mo amount in the wire is more than 0%, but the amount is preferably 0.01% or more, more preferably 0.05% or more, still more preferably 0.10% or more. In addition, the Mo amount in the wire is preferably 0.35% or less, more preferably 0.30% or less, still more preferably 0.25% or less, yet still more preferably 0.20% or less.

(Nb: 0.030 mass% or less)

Nb is an element effective in ensuring the strength of the weld metal. However, if the amount of Nb is excessive, the strength may increase excessively, causing deterioration of the toughness.

From these viewpoints, in the case of incorporating Nb into the wire, it is sufficient as long as the Nb amount in the wire is more than 0%, but the amount is preferably 0.001% or more, more preferably 0.005% or more, still more preferably 0.008% or more. In addition, the Nb amount in the wire is preferably 0.030% or less, more preferably 0.020% or less, still more preferably 0.015% or less.

(V: 0.050 mass% or less)

V is an element effective in ensuring the strength of the weld metal. However, if the amount of V is excessive, the strength may increase excessively, causing deterioration of the toughness.

From these viewpoints, in the case of incorporating V into the wire, it is sufficient as long as the V amount in the wire is more than 0%, but the amount is preferably 0.001% or more, more preferably 0.005% or more, still more preferably 0.008% or more. In addition, the V amount in the wire is preferably 0.050% or less, more preferably 0.020% or less, still more preferably 0.015% or less.

(A total of Li, Na and K: 1.0 mass% or less)

Li, Na and K are elements having an effect of enhancing the arc stability and reducing spatter generation. However, if the amounts of these elements are excessive, the hygroscopicity resistance may deteriorate, causing a problem with low-temperature cracking resistance and porosity resistance.

From these viewpoints, in the case of incorporating one or more of Li, Na and K into the wire, it is sufficient as long as the total amount of Li, Na and K in the wire is more than 0%, but the total amount is preferably 0.005% or more, more preferably 0.010% or more, still more preferably 0.020% or more. In addition, the total amount of Li, Na and K in the wire is preferably 1.0% or less, more preferably 0.50% or less, still more preferably 0.20% or less.

(Mg: 1.0 mass% or less)

Mg is an element having an effect of enhancing the arc stability and reducing spatter generation. However, if the amount of Mg is excessive, spatter generation rather increases.

From these viewpoints, in the case of incorporating Mg into the wire, it is sufficient as long as the Mg amount in the wire is more than 0%, but the amount is preferably 0.005% or more, more preferably 0.050% or more, still more preferably 0.20% or more. In addition, the Mg amount in the wire is preferably 1.0% or less, more preferably 0.90% or less, still more preferably 0.70% or less.

(F: 1.0 mass% or less)

F may be incorporated into the wire so as to adjust the arc spraying force (concentration) and reduce the amount of hydrogen diffused in the deposited metal. However, if the amount of F becomes excessive, the fume emission and spatter generated may increase.

From these viewpoints, in the case of incorporating F into the wire, it is sufficient as long as the F amount in the wire is more than 0%, but the amount is preferably 0.010% or more, more preferably 0.025% or more, still more preferably 0.050% or more. In addition, the F amount in the wire is preferably 1.0% or less, more preferably 0.60% or less, still more preferably 0.40% or less.

(ZrO$_2$: from 0.02 to 0.50 mass%)

ZrO$_2$ is a component having an effect of enhancing the bead smoothness. However, if the amount of ZrO$_2$ is excessive, a convex bead shape may be formed in a vertical position. On the other hand, if the amount of ZrO$_2$ is too small, the bead smoothness may deteriorate.

From these viewpoints, in the case of incorporating ZrO$_2$ into the wire, the ZrO$_2$ amount in the wire is preferably 0.02% or more, more preferably 0.05% or more. In addition, the ZrO$_2$ amount in the wire is preferably 0.50% or less, more preferably 0.45% or less.

(Al$_2$O$_3$: from 0.02 to 0.80 mass%)

Al$_2$O$_3$ is a component having an effect of enhancing the bead smoothness. However, if the amount of Al$_2$O$_3$ is excessive, the bead wettability may deteriorate or spatter may be generated. On the other hand, if the amount of Al$_2$O$_3$ is too small, the bead smoothness may deteriorate.

From these viewpoints, in the case of incorporating Al$_2$O$_3$ into the wire, the Al$_2$O$_3$ amount in the wire is preferably 0.02% or more, more preferably 0.05% or more. In addition, the Al$_2$O$_3$ amount in the wire is preferably 0.80% or less, more preferably 0.60% or less.

The amount of Al metal is not regarded as the amount of Al$_2$O$_3$.

In one preferred embodiment, the flux-cored wire for gas-shielded arc welding of this embodiment satisfies Mn: from 1.1 to 3.4 mass%, and Ti in terms of Ti in Ti alloy and Ti compound: from 2.4 to 4.0 mass%, and contains both of Ni: from 1.00 to 3.50 mass% and B: from 0.0008 to 0.012 mass%.

More specifically, the flux-cored wire for gas-shielded arc welding according to this one preferred embodiment is a flux-cored wire for gas-shielded arc welding, containing, based on the total mass of the wire:

C: from 0.03 to 0.12 mass%;
Si in terms of Si in Si alloy and Si compound: from 0.20 to 0.70 mass%;
Mn: from 1.1 to 3.4 mass%;
Ti in terms of Ti in Ti alloy and Ti compound: from 2.4 to 4.0 mass%;
Al: from 0.005 to 0.050 mass%;
Ca: from 0.03 to 1.0 mass%;
Ni: from 1.00 to 3.50 mass%;
B: from 0.0008 to 0.012 mass%; and
Fe: 80 mass% or more, and
satisfying:

(Ti+Mn+Al+Ca)/Si$\geq$12; and
Ca/Si: from 0.07 to 0.35.

According to the flux-cored wire for gas-shielded arc welding of this embodiment, for the above-described reasons, the glass phase having a low Young's modulus in an oxide-based inclusion of the weld metal can be reduced. In addition, both a specific amount of Ni and a specific amount of B are contained, and the Mn amount and the Ti amount are further controlled in respective specific ranges, so that while reducing formation of coarse grain boundary ferrite, which adversely affects the toughness, formation of grain boundary bainite competing with acicular ferrite can be inhibited, thereby enabling to increase a fine acicular ferrite (AF) structure formed starting from an inclusion, which is effective in improving the low-temperature toughness. Consequently, the low-temperature toughness can be further improved.

The flux-cored wire of this embodiment is a wire obtained typically by filling a steel-made outer shell with a flux. More specifically, the flux-cored wire according to this embodiment is composed of a stainless steel- or soft steel-made outer shell taking on a tubular shape and a flux filling the interior (inner side) of the outer shell.

The flux-cored wire may be in either form of a seamless one having no seam on the outer shell or a seam one having a seam on the outer shell. Furthermore, in the flux-cored wire, the wire surface (outside of the outer shell) may or may not be subjected to plating, etc.

Then, one embodiment of the method for producing the flux-cored wire of this embodiment is described.

In the production of the flux-cored wire of this embodiment, first, the interior of a steel-made outer shell is filled with a flux. On this occasion, a soft steel or low alloy steel having good wire drawability is preferably used for the outer shell. In addition, the composition and filling rate of the flux can be appropriately adjusted depending on the composition, thickness, etc. of the outer shell such that the total wire composition falls in the above-described range.

The wire in which the interior of the outer shell is filled with a flux is then drawn using a pore die or a roller die to decrease in diameter, and a flux-cored wire having a predetermined outside diameter is thereby obtained.

The outside diameter of the flux-cored wire of this embodiment is not particularly limited but in view of productivity of the wire, is preferably from 1.0 to 2.0 mm, more preferably from 1.2 to 1.6 mm.

The flux filling rate may be set to any value as long as each component in the wire falls within the range of the present invention, but in view of wire drawability and workability (e.g., feedability) during welding, the flux filling rate is preferably from 10 to 25 mass%, more preferably from 13 to 16 mass%, based on the total mass of the wire. The flux filling rate is defined as the ratio of the mass of the flux filling the interior of the outer shell to the total mass of the wire (i.e., outer shell + flux).

<Weld Metal>

The weld metal (low alloy steel weld metal) of this embodiment is a weld metal containing: C: from 0.04 to 0.12 mass%; Si: from 0.10 to 0.50 mass%; Mn: from 0.80 to 3.00 mass%; Ti: from 0.030 to 0.100 mass%; Al: from 0.002 to 0.010 mass%; O: from 0.030 to 0.070 mass%; N: more than 0 and 0.01 mass% or less; Ca: from 0.0003 to 0.01 mass%; and at least one of Ni: from 0.30 to 3.50 mass% and B: from 0.0005 to 0.0070 mass%; with the remainder consisting of Fe and inevitable impurities,

wherein the average composition of oxide-based inclusions having a minor diameter of 1 $\mu$m or more contained in the weld metal satisfies, by mass%, the following requirements (1) to (3):

$$Al_2O_3+SiO_2+MnO+TiO_2+CaO \geq 70\% \qquad (1)$$

$$(TiO_2+MnO+Al_2O_3+CaO)/SiO_2 \geq 5 \qquad (2)$$

$$CaO/SiO_2: \text{from 0.20 to 3.0} \qquad (3)$$

The weld metal of this embodiment is, for example, a weld metal having excellent low-temperature toughness obtained by gas-shielded arc welding using the above-described flux-cored wire for gas-shielded arc welding.

The reason for numerical limitation on the amount of each of components contained in the weld metal of this embodiment is described below. The amount of each component in the weld metal is a content based on the total mass of the weld metal, i.e., a content based on the total mass of the weld metal.

(C: from 0.04 to 0.12 mass%)

The reason for numerical limitation on the C amount in the weld metal is the same as the reason for numerical limitation on the C amount in the wire above.

Accordingly, the C amount in the weld metal is 0.12% or less, preferably 0.10% or less, more preferably 0.08% or less. In addition, the C amount in the weld metal is 0.04% or more, preferably 0.05% or more, more preferably 0.06% or more.

(Si: from 0.10 to 0.50 mass%)

The reason for numerical limitation on the Si amount in the weld metal is the same as the reason for numerical limitation on the C amount in the wire above.

Accordingly, the Si amount in the weld metal is 0.50% or less, preferably 0.40% or less, more preferably 0.35% or less, still more preferably 0.30% or less. In addition, the Si amount in the weld metal is 0.10% or more, preferably 0.15% or more, more preferably 0.20% or more.

(Mn: from 0.80 to 3.00 mass%)

The reason for numerical limitation on the Mn amount in the weld metal is the same as the reason for numerical limitation on the Mn amount in the wire above.

Accordingly, the Mn amount in the weld metal is 3.00% or less, preferably 2.50% or less, more preferably 1.90% or less. In addition, the Mn amount in the weld metal is 0.80% or more, preferably 1.20% or more, more preferably 1.50% or more.

(Ti: from 0.030 to 0.100 mass%)

The reason for numerical limitation on the Ti amount in the weld metal is the same as the reason for numerical limitation on the Ti amount in the wire above.

Accordingly, the Ti amount in the weld metal is 0.100% or less, preferably 0.080% or less, more preferably 0.070% or less. In addition, the Ti amount in the weld metal is 0.030% or more, preferably 0.040% or more, more preferably 0.050% or more.

(Al: from 0.002 to 0.010 mass%)

The reason for numerical limitation on the Al amount in the weld metal is the same as the reason for numerical limitation on the Al amount in the wire above.
Accordingly, the Al amount in the weld metal is 0.010% or less, preferably 0.008% or less, more preferably 0.006% or less. In addition, the Al amount in the weld metal is 0.002% or more, preferably 0.003% or more, more preferably 0.004% or more.

(Ca: from 0.0003 to 0.01 mass%)

The reason for numerical limitation on the Ca amount in the weld metal is the same as the reason for numerical limitation on the Ca amount in the wire above.
Accordingly, the Ca amount in the weld metal is 0.01% or less, preferably 0.005% or less, more preferably 0.003% or less. In addition, the Ca amount in the weld metal is 0.0003% or more, preferably 0.0004% or more, more preferably 0.0005% or more.

(O: from 0.030 to 0.070 mass%)

O is an element contributing to the formation of slag ensuring the welding workability. If the amount of O is excessive, an oxide-based inclusion may increase, causing deterioration of the toughness. On the other hand, if the amount of O is too small, the welding workability may seriously deteriorate.
From these viewpoints, the O amount in the weld metal is 0.070% or less, preferably 0.060% or less, more preferably 0.055% or less. In addition, the O amount in the weld metal is 0.030% or more, preferably 0.035% or more, more preferably 0.040% or more.

(N: more than 0 and 0.01 mass% or less)

If N is incorporated in an excessive amount, the strength may increase excessively, causing deterioration of the toughness, but it is industrially difficult to reduce it to 0%.
Accordingly, the N amount in the weld metal is controlled to be more than 0 and 0.01% or less. The N amount is preferably 0.007% or less, more preferably 0.006% or less.

(At least one of Ni: from 0.30 to 3.50 mass% and B: from 0.0005 to 0.0070 mass%)

The reason for numerical limitation on the Ni amount in the weld metal is the same as the reason for numerical limitation on the Ni amount in the wire above.
In addition, the reason for numerical limitation on the B amount in the weld metal is the same as the reason for numerical limitation on the B amount in the wire above.
The weld metal of this embodiment contains at least one of Ni and B in a specific amount range.
In the case of incorporating Ni into the weld metal, the Ni amount in the weld metal is 3.50% or less, preferably 3.00% or less, more preferably 2.70% or less. In addition, the Ni amount in the wire is 0.30% or more, preferably 1.00% or more, more preferably 2.00% or more.
In the case of incorporating B into the weld metal, the B amount in the weld metal is 0.0070% or less, preferably 0.0050% or less, more preferably 0.0030% or less. In addition, the B amount in the wire is 0.0005% or more, preferably 0.0008% or more, more preferably 0.0010% or more.

(Fe and Inevitable impurities)

The remainder of the weld metal of this embodiment consists of Fe and inevitable impurities.
The amount of Fe of the remainder is, for example, 90 mass% or more, preferably 90.5 mass% or more, more preferably 91 mass% or more.
The upper limit of the amount of Fe is not particularly limited but the amount of Fe is, for example, 98.7 mass% or less in relation to other component composition.
The inevitable impurities of the remainder may be impurities in which a component (e.g., P, S, Sn, Pb, Sb) other than the above-described components, or the later-described components (e.g., Nb, V, Cu) that may be selectively contained are inevitably contained, and these components are allowed to be contained as long as the effects of the present invention are not inhibited.

In the weld metal of this embodiment, the average composition of oxide-based inclusions having a minor diameter of 1 $\mu$m or more contained in the weld metal satisfies, by mass%, the following requirements (1) to (3):

$$Al_2O_3+SiO_2+MnO+TiO_2+CaO \geq 70\% \qquad (1)$$

$$(TiO_2+MnO+Al_2O_3+CaO)/SiO_2 \geq 5 \qquad (2)$$

$$CaO/SiO_2: \text{from 0.20 to 3.0} \qquad (3)$$

($Al_2O_3+SiO_2+MnO+TiO_2+CaO \geq 70\%$)

$Al_2O_3+SiO_2+MnO+TiO_2+CaO$ is a parameter indicative of the composition of the oxide-based inclusion, and if it is less than 70%, a fine acicular ferrite structure formed starting from an inclusion may decrease, leading to a reduction in the low-temperature toughness.

Accordingly, in the weld metal of this embodiment, the average composition of oxide-based inclusions is controlled to satisfy, by mass%, $Al_2O_3+SiO_2+MnO+TiO_2+CaO$ of 70% or more, preferably 75% or more, more preferably 80% or more.

(($TiO_2+MnO+Al_2O_3+CaO)/SiO_2 \geq 5$)

$(TiO_2+MnO+Al_2O_3+CaO)/SiO_2$ is a parameter indicative of the amount of the glass phase in an oxide-based inclusion, and if it is less than 5, the amount of the glass phase may increase, causing deterioration of the toughness.

Accordingly, in the weld metal of this embodiment, the average composition of oxide-based inclusions is controlled to satisfy $(TiO_2+MnO+Al_2O_3+CaO)/SiO_2$ of 5 or more, preferably 10 or more, more preferably 20 or more.

($CaO/SiO_2$: from 0.20 to 3.0)

$CaO/SiO_2$ is a parameter indicative of the amount of the glass phase in an oxide-based inclusion of the weld metal.

Here, if $CaO/SiO_2$ is too large, formation of acicular ferrite starting from an inclusion may be reduced, causing deterioration of the low-temperature toughness. From this viewpoint, in the weld metal of this embodiment, $CaO/SiO_2$ is 3.0 or less, preferably 2.8 or less, more preferably 2.6 or less. On the other hand, if $CaO/SiO_2$ is too small, the glass phase in an inclusion may increase, making it impossible to ensure the low-temperature toughness. From this viewpoint, in the weld metal of this embodiment, $CaO/SiO_2$ is 0.20 or more, preferably 0.50 or more, more preferably 0.60 or more.

The average composition of oxide-based inclusions having a minor diameter of 1 $\mu$m or more contained in the weld metal can be measured by the Electron Probe X-ray Micro Analyzer (EPMA) method. In addition, the oxide-based inclusion contains $TiO_2$, $MnO$, $Al_2O_3$, $SiO_2$, and $CaO$, and the components of the remainder are inevitable oxides and inevitable fluorides. The inevitable oxide is an oxide unavoidably contained during welding, etc. and examples thereof include, for example, $ZrO_2$, $Cr_2O_3$, $Li_2O$, $Na_2O$, $MgO$, $FeO$, $Fe_3O_4$, and $Fe_2O_3$. Examples of the inevitable fluoride include $CaF_2$. The inevitable oxide or the inevitable fluoride may be contained as long as it does not adversely affect the properties described above and desired properties are obtained. The total mass percentage of inevitable oxide and inevitable fluoride based on the total mass of the oxide-based inclusion is, typically, preferably less than 30%, more preferably 20% or less. In addition, each of $ZrO_2$, $Cr_2O_3$, $Li_2O$, $Na_2O$, $MgO$, $FeO$, $Fe_3O_4$, $Fe_2O_3$ and $CaF_2$ may be contained at a mass percentage of less than 10% based on the total mass of the oxide-based inclusion.

In order for oxide-based inclusions having a minor diameter of 1 $\mu$m or more contained in the weld metal to satisfy the requirements (1) to (3), the composition of the wire used, the composition of the base metal, various welding conditions, etc. are appropriately adjusted.

In addition to each of the components described above, the weld metal of this embodiment may further contain at least one of the following components in a predetermined amount.

(Cu: 0.40 mass% or less)

The reason for numerical limitation on the Cu amount in the weld metal is the same as the reason for numerical limitation on the Cu amount in the wire above.

Accordingly, in the case of incorporating Cu into the weld metal, it is sufficient as long as the Cu amount in the weld metal is more than 0%, but the amount is preferably 0.01% or more, more preferably 0.05% or more, still more preferably 0.10% or more. In addition, the Cu amount in the weld metal is preferably 0.40% or less, more preferably 0.30% or less, still more preferably 0.25% or less.

(Cr: 1.0 mass% or less)

The reason for numerical limitation on the Cr amount in the weld metal is the same as the reason for numerical limitation on the Cr amount in the wire above.

Accordingly, in the case of incorporating Cr into the weld metal, it is sufficient as long as the Cr amount in the weld metal is more than 0%, but the amount is preferably 0.01% or more, more preferably 0.05% or more, still more preferably 0.10% or more. In addition, the Cr amount in the weld metal is preferably 1.0% or less, more preferably 0.8% or less, still more preferably 0.6% or less.

(Mo: 0.35 mass% or less)

The reason for numerical limitation on the Mo amount in the weld metal is the same as the reason for numerical limitation on the Mo amount in the wire above.

Accordingly, in the case of incorporating Mo into the weld metal, it is sufficient as long as the Mo amount in the weld metal is more than 0%, but the amount is preferably 0.01% or more, more preferably 0.05% or more, still more preferably 0.10% or more. In addition, the Mo amount in the weld metal is preferably 0.35% or less, more preferably 0.30% or less, still more preferably 0.25% or less, yet still more preferably 0.20% or less.

(Nb: 0.020 mass% or less)

The reason for numerical limitation on the Nb amount in the weld metal is the same as the reason for numerical limitation on the Nb amount in the wire above.

Accordingly, in the case of incorporating Nb into the weld metal, it is sufficient as long as the Nb amount in the weld metal is more than 0%, but the amount is preferably 0.001% or more, more preferably 0.005% or more, still more preferably 0.008% or more. In addition, the Nb amount in the weld metal is preferably 0.020% or less, more preferably 0.015% or less, still more preferably 0.012% or less.

(V: 0.050 mass% or less)

The reason for numerical limitation on the V amount in the weld metal is the same as the reason for numerical limitation on the V amount in the wire above.

Accordingly, in the case of incorporating V into the weld metal, it is sufficient as long as the V amount in the weld metal is more than 0%, but the amount is preferably 0.001% or more, more preferably 0.005% or more, still more preferably 0.008% or more. In addition, the V amount in the weld metal is preferably 0.050% or less, more preferably 0.020% or less, still more preferably 0.015% or less.

One preferred embodiment of the weld metal above is a weld metal satisfying: Si: from 0.20 to 0.50 mass%, Mn: from 1.00 to 2.40 mass%, and Ti: from 0.030 to 0.090 mass%, and

containing both of Ni: from 1.00 to 3.50 mass% and B: from 0.0005 to 0.0070 mass%,

wherein the average composition of oxide-based inclusions having a minor diameter of 1 $\mu$m or more contained in the weld metal satisfies the following formula (3'):

$$CaO/SiO_2: \text{from 0.50 to 3.0} \qquad (3')$$

and wherein the rate of acicular ferrite formation defined by the following formula is 15% or more:

$$\text{Rate of acicular ferrite formation (\%)} = (\text{number of inclusions acting as a start point of acicular ferrite/number of all inclusions}) \times 100$$

More specifically, the weld metal according this one preferred embodiment is a weld metal containing:

C: from 0.04 to 0.12 mass%,

Si: from 0.20 to 0.50 mass%,
Mn: from 1.00 to 2.40 mass%,
Ti: from 0.030 to 0.090 mass%,
Al: from 0.002 to 0.010 mass%,
O: from 0.030 to 0.070 mass%,
N: more than 0 and 0.01 mass% or less,
Ca: from 0.0003 to 0.01 mass%,
Ni: from 1.00 to 3.50 mass%, and
B: from 0.0005 to 0.0070 mass%,
with the remainder consisting of Fe and inevitable impurities,
wherein the average composition of oxide-based inclusions having a minor diameter of 1 $\mu$m or more contained in the weld metal satisfies, by mass%, the following requirements (1) to (3'):

$$Al_2O_3+SiO_2+MnO+TiO_2+CaO \geq 70\% \qquad (1)$$

$$(TiO_2+MnO+Al_2O_3+CaO)/SiO_2 \geq 5 \qquad (2)$$

$$CaO/SiO_2: \text{from } 0.50 \text{ to } 3.0 \qquad (3')$$

and
wherein the rate of acicular ferrite formation defined by the following formula is 15% or more:

$$\text{Rate of acicular ferrite formation (\%)} = (\text{number of inclusions acting as a start point of acicular ferrite/number of all inclusions}) \times 100$$

In the weld metal of this embodiment, for the above-described reasons, the glass phase having a low Young's modulus in an oxide-based inclusion of the weld metal is reduced. In addition, both a specific amount of Ni and a specific amount of B are contained and furthermore, each of the Si amount, the Mn amount and the Ti amount falls in a specific range, so that while reducing formation of coarse grain boundary ferrite, which adversely affects the toughness, formation of grain boundary bainite competing with acicular ferrite is inhibited and a fine acicular ferrite (AF) structure formed starting from an inclusion, which is effective in improving the low-temperature toughness, is thereby increased. Consequently, the low-temperature toughness can be further improved.

Here, the rate of acicular ferrite (AF) formation (%) is a parameter indicative of a capability of forming fine acicular ferrite (AF) contributing to the improvement of low-temperature toughness and is defined by (number of inclusions acting as a start point of acicular ferrite/number of all inclusions)$\times$100.

From these viewpoints, the rate of acicular ferrite formation in the weld metal of this embodiment is 15% or more, preferably 18% or more, more preferably 20% or more.

The rate of acicular ferrite formation can be measured as follows.

First, the weld metal is cut at a surface perpendicular to the welding direction and etched with nital (nitric acid:ethanol=5:95). Subsequently, a range of 165 $\mu$m$\times$219 $\mu$m of the unmodified portion of the final pass is photographed by an optical microscope at a magnification of 400 in four visual fields and out of inclusion particles on the photograph, those having an equivalent-circle diameter of 1.5 $\mu$m or more are selected. Then, a structure extending radially from an inclusion particle is defined as acicular ferrite, and the rate of acicular ferrite formation (%) is measured based on the following formula:

$$\text{Rate of acicular ferrite formation (\%)} = (\text{number of inclusions acting as a start point of acicular ferrite/number of all inclusions}) \times 100$$

Furthermore, in the deposited metal of this embodiment, the tensile strength in a tensile test in conformity with JIS Z2202 is preferably in excess of 490 MPa, more preferably in excess of 690 MPa, still more preferably in excess of 780 MPa.

[Second Embodiment]

<Flux-Cored Wire for Gas-Shielded Arc Welding>

The flux-cored wire for gas-shielded arc welding of this embodiment (hereinafter, sometimes simply referred to as "flux-cored wire" or "wire") of this embodiment contains, based on the total mass of the wire: C: from 0.04 to 0.12 mass%; Si in terms of Si in Si alloy and Si compound: from 0.10 to 0.60 mass%; Mn: from 1.5 to 3.4 mass%; Ti in terms of Ti in Ti alloy and Ti compound: from 2.4 to 4.0 mass%; Al: from 0.005 to 0.050 mass%; Ca: from 0.03 to 1.0 mass%; Ni: from 1.00 to 3.50 mass%; Mo: from 0.35 to 1.40 mass%; and Fe: 80 mass% or more, and satisfies: $(Ti+Mn+Al+Ca)/Si \geq 12$; and Ca/Si: from 0.07 to 0.35.

The reason for numerical limitation on the amount of each of components contained in the flux-cored wire for gas-shielded arc welding of this embodiment is described below. In the following, the amount of each component in the flux-cored wire for gas-shielded arc welding is a content based on the total mass of the flux-cored wire for gas-shielded arc welding, i.e., a content based on the total mass of the wire.

(C: from 0.04 to 0.12 mass%)

C is an element effective in enhancing the strength of the weld metal. However, if the amount of C is excessive, the strength may increase excessively, causing deterioration of the toughness. On the other hand, if the amount of C is too small, a lack of strength may be caused.

From these viewpoints, the C amount in the wire is 0.12% or less, preferably 0.10% or less, more preferably 0.08% or less. In addition, the C amount in the wire is 0.05% or more, preferably 0.055% or more.

(Si in terms of Si in Si alloy and Si compound: from 0.10 to 0.60 mass%)

Si is an element improving the workability during welding. However, if the amount of Si is excessive, the Young's modulus of an inclusion is different from that of the matrix, and brittle fracture starting from an inclusion is likely to occur. On the other hand, if the amount of Si is too small, the welding workability may be reduced.

From these viewpoints, the Si amount in the wire is, in terms of Si in an Si alloy and an Si compound, 0.60% or less, preferably 0.50% or less, more preferably 0.45% or less. In addition, the Si amount in the wire is, in terms of Si in an Si alloy and an Si compound, 0.10% or more, preferably 0.20% or more, more preferably 0.30% or more.

Here, examples of the Si source also include potash glass and soda glass, besides $SiO_2$, $K_2SiF_6$, etc.

(Mn: from 1.5 to 3.4 mass%)

Mn is an element necessary for ensuring the strength. However, if the amount of Mn is excessive, the strength may increase excessively, leading to a reduction in the toughness. On the other hand, if the amount of Mn is too small, a lack of strength may be caused.

From these viewpoints, the Mn amount in the wire is 3.4% or less, preferably 3.0% or less, more preferably 2.9% or less. In addition, the Mn amount in the wire is 1.5% or more, preferably 1.7% or more, more preferably 2.0% or more.

(Ti in terms of Ti in Ti alloy and Ti compound: from 2.4 to 4.0 mass%)

Ti is an element constituting an inclusion. However, if the amount of Ti is excessive, the strength may increase excessively, causing deterioration of the toughness. On the other hand, if the amount of Ti is too small, acicular ferrite formation starting from an inclusion may decrease, making it impossible to ensure the low-temperature toughness.

From these viewpoints, the Ti amount in the wire is, in terms of Ti in Ti alloy and Ti compound, 4.0% or less, preferably 3.8% or less, more preferably 3.5% or less. In addition, the Ti amount in the wire is, in terms of Ti in Ti alloy and Ti compound, 2.4% or more, preferably 2.5% or more, more preferably 2.6% or more.

Here, examples of the Ti source include $TiO_2$, etc.

(Al: from 0.005 to 0.050 mass%)

Al is an element acting as a deoxidizer. However, if the amount of Al is excessive, formation of acicular ferrite starting from an inclusion may decrease, making it impossible to ensure the low-temperature toughness. On the other hand, if the amount of Al is too small, a blowhole may be formed due to insufficient deoxidation.

From these viewpoints, the Al amount in the wire is 0.050% or less, preferably 0.045% or less, more preferably 0.042% or less. In addition, the Al amount in the wire is 0.005% or more, preferably 0.008% or more, more preferably 0.010% or more.

(Ca: from 0.03 to 1.0 mass%)

Ca is a strong deoxidizing element and contributes to improvement of the toughness by reducing Si during welding and consequently reducing the glass phase inclusion (Si-based) having a low Young's modulus compared with the matrix. However, if the amount of Ca is excessive, the amount of acicular ferrite formed may be reduced and the toughness deteriorates. On the other hand, if the amount of Ca is too small, the glass phase inclusion in the weld metal may increase, leading to a reduction in the toughness.
From these viewpoints, the Ca amount in the wire is 0.03% or more, preferably 0.04% or more, more preferably 0.05% or more. In addition, the Ca amount in the wire is preferably 1.0% or less, more preferably 0.5% or less, still more preferably 0.3% or less.

(Ni: from 1.00 to 3.50 mass%)

Ni is an element necessary for preventing brittle fracture. However, if the amount of Ni is excessive, the amount of martensite formed may increase to raise the strength and in turn, the Charpy impact absorption energy may decrease. On the other hand, if the amount of Ni is too small, brittle fracture may occur. Furthermore, sufficient strength may not be ensured.
From these viewpoints, the Ni amount in the wire is 3.50% or less, preferably 3.00% or less, more preferably 2.70% or less. In addition, the Ni amount in the wire is 1.00% or more, preferably 1.20% or more, more preferably 2.00% or more.

(Mo: from 0.35 to 1.40 mass%)

Mo is an element effective in ensuring the strength of the weld metal. However, if the amount of Mo is excessive, the strength may increase excessively, causing deterioration of the toughness. On the other hand, if the amount of Mo is too small, a lack of strength may be caused.
From these viewpoints, the Mo amount in the wire is 0.35% or more, preferably 0.45% or more, more preferably 0.50% or more. In addition, the Mo amount in the wire is 1.40% or less, preferably 1.20% or less, more preferably 1.10% or less.

$((Ti+Mn+Al+Ca)/Si \geq 12)$

(Ti+Mn+Al+Ca)/Si is a parameter for controlling the percentage of the glass phase in an oxide-based inclusion dispersed in the weld metal. If it falls below the predetermined value, the percentage of the glass phase may increase, causing deterioration of the toughness.
From this viewpoint, in this embodiment, the ratio ((Ti+Mn+Al+Ca)/Si) of the total amount of deoxidizing elements (Mn, Ti, Al, Ca) contained in the wire to the Si amount is 12 or more, preferably 14 or more, more preferably 16 or more, On the other hand, the upper limit of (Ti+Mn+Al+Ca)/Si is not particularly limited but the ratio is preferably 200 or less, more preferably 150 or less.

(Ca/Si: from 0.07 to 0.35)

Ca/Si is a parameter for controlling the percentage of the glass phase in an oxide-based inclusion dispersed in the weld metal and the capability of forming acicular ferrite. If it falls below the predetermined value, the percentage of the glass phase in an inclusion may increase, causing deterioration of the low-temperature toughness. On the other hand, if it is excessive, the capability of forming acicular ferrite is reduced.
From these viewpoints, in the wire of this embodiment, Ca/Si is 0.35 or less, preferably 0.29 or less, more preferably 0.25 or less. In addition, Ca/Si is 0.07 or more, preferably 0.09 or more, more preferably 0.12 or more.

(Fe and inevitable impurities)

The remainder of the flux-cored wire of this embodiment consists of Fe and inevitable impurities. Furthermore, in the flux-cored wire of this embodiment, an alloy element other than the above-described elements, a slag forming agent, an arc stabilizer, etc. may be added in addition to respective components described above, as long as the effects of the present invention are not inhibited. Details for the remainder are the same as in the first embodiment.

Furthermore, in addition to respective components described above, the flux-cored wire of this embodiment may further contain at least one of the following components in a predetermined amount.

(Cu: 0.40 mass% or less)

Cu may be incorporated into the wire in an amount of up to 0.40% or less. The reason for adding Cu and the preferable range thereof are the same as in the first embodiment.

(Cr: 1.0 mass% or less)

Cr may be incorporated into the wire in an amount of up to 1.0% or less. The reason for adding Cr and the preferable range thereof are the same as in the first embodiment.

(Nb: 0.030 mass% or less)

Nb may be incorporated into the wire in an amount of up to 0.030% or less. The reason for adding Nb and the preferable range thereof are the same as in the first embodiment.

(V: 0.050 mass% or less)

V may be incorporated into the wire in an amount of up to 0.050% or less. The reason for adding V and the preferable range thereof are the same as in the first embodiment.

(B: 0.010 mass% or less)

B is an element contributing to the enhancement of strength, but if it is added excessively, high-temperature cracking may occur.
Accordingly, in the case of incorporating B, from the above-described viewpoint, the B amount in the wire is 0.010% or less, preferably 0.008% or less, more preferably 0.006% or less.

(A total of Li, Na and K: 1.0 mass% or less)

Li, Na and K may be incorporated in a total amount of 1.0% or less. The reason for adding Li, Na and K and the preferable range thereof are the same as in the first embodiment.

(Mg: 1.0 mass% or less)

Mg may be incorporated into the wire in an amount of up to 1.0% or less. The reason for adding Mg and the preferable range thereof are the same as in the first embodiment.

(F: 1.0 mass% or less)

F may be incorporated into the wire in an amount of up to 1.0% or less. The reason for adding F and the preferable range thereof are the same as in the first embodiment.

($ZrO_2$: from 0.02 to 0.50 mass%)

$ZrO_2$ may be incorporated into the wire in an amount of 0.02 to 0.50%. The reason for adding $ZrO_2$ and the preferable range thereof are the same as in the first embodiment.

($Al_2O_3$: from 0.02 to 0.80 mass%)

$Al_2O_3$ may be incorporated into the wire in an amount of 0.02 to 0.80%. The reason for adding $Al_2O_3$ and the preferable range thereof are the same as in the first embodiment.
As for the production method, outside diameter, flux filling rate, etc. of the flux-cored wire of this embodiment, those applied to the first embodiment are appropriately employed.

<Weld Metal>

The weld metal (low alloy steel weld metal) of this embodiment is a weld metal containing: C: from 0.05 to 0.12 mass%; Si: from 0.05 to 0.40 mass%; Mn: from 1.4 to 2.4 mass%; Ti: from 0.030 to 0.090 mass%; Al: from 0.002 to 0.010 mass%; O: from 0.030 to 0.070 mass%; N: more than 0 and 0.01 mass% or less; Ca: from 0.0003 to 0.01 mass%; Ni: from 1.00 to 3.50 mass%; and Mo: from 0.35 to 1.40 mass%,
with the remainder consisting of Fe and inevitable impurities,
wherein the average composition of oxide-based inclusions having a minor diameter of 1 $\mu$m or more contained in the weld metal satisfies, by mass%, the following requirements (1) to (3'):

$$Al_2O_3+SiO_2+MnO+TiO_2+CaO \geq 70\% \qquad (1)$$

$$(TiO_2+MnO+Al_2O_3+CaO)/SiO_2 \geq 5 \qquad (2)$$

$$CaO/SiO_2: \text{ from } 0.50 \text{ to } 3.0 \qquad (3')$$

and
wherein the rate of acicular ferrite formation defined by the following formula is 15% or more:

$$\text{Rate of acicular ferrite formation (\%)} = (\text{number of inclusions acting as a start}$$

$$\text{point of acicular ferrite/number of all inclusions}) \times 100$$

The weld metal of this embodiment is a weld metal having both good low-temperature toughness and high strength obtained, for example, by gas-shielded arc welding using the above-described flux-cored wire for gas-shielded arc welding.
The reason for numerical limitation on the amount of each of components contained in the weld metal of this embodiment is described below. The amount of each component in the weld metal is a content based on the total mass of the weld metal, i.e., a content based on the total mass of the weld metal.

(C: from 0.05 to 0.12 mass%)

The reason for numerical limitation on the C amount in the weld metal is the same as the reason for numerical limitation on the C amount in the wire above.
Accordingly, the C amount in the weld metal is 0.12% or less, preferably 0.10% or less, more preferably 0.08% or less. In addition, the C amount in the weld metal is 0.05% or more, preferably 0.06% or more, more preferably 0.065% or more.

(Si: from 0.05 to 0.40 mass%)

The reason for numerical limitation on the Si amount in the weld metal is the same as the reason for numerical limitation on the C amount in the wire above.
Accordingly, the Si amount in the weld metal is 0.40% or less, preferably 0.35% or less, more preferably 0.32% or less, still more preferably 0.30% or less. In addition, the Si amount in the weld metal is 0.05% or more, preferably 0.20% or more, more preferably 0.23% or more.

(Mn: from 1.40 to 2.40 mass%)

The reason for numerical limitation on the Mn amount in the weld metal is the same as the reason for numerical limitation on the Mn amount in the wire above.
Accordingly, the Mn amount in the weld metal is 2.40% or less, preferably 2.30% or less, more preferably 2.20% or less. In addition, the Mn amount in the weld metal is 1.40% or more, preferably 1.50% or more, more preferably 1.70% or more.

(Ti: from 0.030 to 0.090 mass%)

The reason for numerical limitation on the Ti amount in the weld metal is the same as the reason for numerical limitation on the Ti amount in the wire above.

Accordingly, the Ti amount in the weld metal is 0.090% or less, preferably 0.080% or less, more preferably 0.070% or less. In addition, the Ti amount in the weld metal is 0.030% or more, preferably 0.035% or more, more preferably 0.040% or more.

(Al: from 0.002 to 0.010 mass%)

The reason for numerical limitation on the Al amount in the weld metal is the same as the reason for numerical limitation on the Al amount in the wire above.

Accordingly, the Al amount in the weld metal is 0.010% or less, preferably 0.008% or less, more preferably 0.006% or less. In addition, the Al amount in the weld metal is 0.002% or more, preferably 0.003% or more, more preferably 0.004% or more.

(Ca: from 0.0003 to 0.01 mass%)

The reason for numerical limitation on the Ca amount in the weld metal is the same as the reason for numerical limitation on the Ca amount in the wire above.

Accordingly, the Ca amount in the weld metal is 0.01% or less, preferably 0.005% or less, more preferably 0.003% or less, still more preferably 0.002% or less. In addition, the Ca amount in the weld metal is 0.0003% or more, preferably 0.0004% or more, more preferably 0.0005% or more.

(O: from 0.030 to 0.070 mass%)

O is an element constituting an inclusion. If the amount of O is insufficient, the number of inclusions serving as the starting point of acicular ferrite may decrease, causing deterioration of the low-temperature toughness. On the other hand, if the amount of O is excessive, a coarse inclusion may increase, leading to a reduction in the impact absorption energy at low temperatures.

From these viewpoints, the O amount in the weld metal is 0.070% or less, preferably 0.060% or less, more preferably 0.055% or less. In addition, the O amount in the weld metal is 0.030% or more, preferably 0.035% or more, more preferably 0.040% or more.

(N: more than 0 and 0.01 mass% or less)

If N is incorporated in an excessive amount, the strength may increase excessively, causing deterioration of the toughness, but it is industrially difficult to reduce N amount to 0%.

Accordingly, the N amount in the weld metal is controlled to be more than 0 and 0.01% or less. The N amount is preferably 0.007% or less, more preferably 0.006% or less.

(Ni: from 1.00 to 3.50 mass%)

The reason for numerical limitation on the Ni amount in the weld metal is the same as the reason for numerical limitation on the Ni amount in the wire above.

Accordingly, the Ni amount in the weld metal is 3.50% or less, preferably 3.00% or less, more preferably 2.70% or less. In addition, the Ni amount in the wire is 1.00% or more, preferably 1.20% or more, more preferably 2.00% or more.

(Mo: from 0.35 to 1.40 mass%)

The reason for numerical limitation on the Mo amount in the weld metal is the same as the reason for numerical limitation on the Mo amount in the wire above.

Accordingly, the Mo amount in the weld metal is 1.40% or less, preferably 1.20% or less, more preferably 1.10% or less. In addition, the Mo amount in the weld metal is 0.35% or more, preferably 0.45% or more, more preferably 0.50% or more.

(Fe and inevitable impurities)

The remainder of the weld metal of this embodiment consists of Fe and inevitable impurities. Details for Fe and inevitable impurities of the remainder are the same as in the first embodiment.

In the weld metal of this embodiment, the average composition of oxide-based inclusions having a minor

diameter of 1 $\mu$m or more contained in the weld metal satisfies, by mass%, the following requirements (1) to (3'), and the remainder consists of inevitable impurities:

$$Al_2O_3 + SiO_2 + MnO + TiO_2 + CaO \geq 70\% \qquad (1)$$

$$(TiO_2 + MnO + Al_2O_3 + CaO)/SiO_2 \geq 5 \qquad (2)$$

$$CaO/SiO_2: \text{from } 0.50 \text{ to } 3.0 \qquad (3')$$

$(Al_2O_3 + SiO_2 + MnO + TiO_2 + CaO \geq 70\%)$

The reason for controlling $Al_2O_3 + SiO_2 + MnO + TiO_2 + CaO$ and the preferable range thereof are the same as in the first embodiment.

$((TiO_2 + MnO + Al_2O_3 + CaO)/SiO_2 \geq 5)$

The reason for controlling $(TiO_2 + MnO + Al_2O_3 + CaO)/SiO_2$ and the preferable range thereof are the same as in the first embodiment.

$(CaO/SiO_2: \text{from } 0.50 \text{ to } 3.0)$

The reason for controlling $CaO/SiO_2$ is the same as in the first embodiment, and in the weld metal of this embodiment, $CaO/SiO_2$ is 3.0 or less, preferably 2.8 or less, more preferably 2.6 or less. In addition, $CaO/SiO_2$ is 0.50 or more, preferably 0.60 or more.
In the weld metal of this embodiment, the rate of acicular ferrite formation is 15% or more.
Here, the rate of acicular ferrite (AF) formation (%) is a parameter indicative of a capability of forming fine acicular ferrite (AF) contributing to the improvement of low-temperature toughness and is defined as (number of inclusions acting as a start point of acicular ferrite/number of all inclusions)$\times$100. If the rate of acicular ferrite formation is less than 15%, a fine acicular ferrite structure formed starting from an inclusion may decrease, causing deterioration of the low-temperature toughness.
From these viewpoints, the rate of acicular ferrite formation in the weld metal of this embodiment is 15% or more, preferably 18% or more, more preferably 20% or more.
In addition to each of the components described above, the weld metal of this embodiment may further contain at least one of the following components in a predetermined amount.

(Cu: 0.40 mass% or less)

The reason for numerical limitation on the Cu amount in the weld metal is the same as the reason for numerical limitation on the Cu amount in the wire above.
Accordingly, in the case of incorporating Cu into the weld metal, it is sufficient as long as the Cu amount in the weld metal is more than 0%, but the amount is preferably 0.05% or more, more preferably 0.10% or more. In addition, the Cu amount in the weld metal is preferably 0.40% or less, more preferably 0.30% or less, still more preferably 0.25% or less.

(Cr: 1.0 mass% or less)

The reason for numerical limitation on the Cr amount in the weld metal is the same as the reason for numerical limitation on the Cr amount in the wire above.
Accordingly, in the case of incorporating Cr into the weld metal, it is sufficient as long as the Cr amount in the weld metal is more than 0%, but the amount is preferably 0.05% or more, more preferably 0.10% or more. In addition, the Cr amount in the weld metal is preferably 1.0% or less, more preferably 0.8% or less, still more preferably 0.6% or less.

(Nb: 0.020 mass% or less)

The reason for numerical limitation on the Nb amount in the weld metal is the same as the reason for numerical limitation on the Nb amount in the wire above.
Accordingly, in the case of incorporating Nb into the weld metal, it is sufficient as long as the Nb amount in the weld metal is more than 0%, but the amount is preferably 0.005% or more, more preferably 0.008% or more. In addition, the Nb amount in the weld metal is preferably 0.020% or less, more preferably 0.015% or less, still more preferably 0.012% or less.

(V: 0.050 mass% or less)

The reason for numerical limitation on the V amount in the weld metal is the same as the reason for numerical limitation on the V amount in the wire above.

Accordingly, in the case of incorporating V into the weld metal, it is sufficient as long as the V amount in the weld metal is more than 0%, but the amount is preferably 0.005% or more, more preferably 0.008% or more. In addition, the V amount in the weld metal is preferably 0.050% or less, more preferably 0.020% or less, still more preferably 0.015% or less.

(B: 0.0050 mass% or less)

The reason for numerical limitation on the B amount in the weld metal is the same as the reason for numerical limitation on the B amount in the wire above.

Accordingly, in the case of incorporating B into the weld metal, the B amount in the weld metal is preferably 0.0050% or less, more preferably 0.0040% or less, still more preferably 0.0030% or less.

Furthermore, in the deposited metal of this embodiment, the tensile strength in a tensile test in conformity with JIS Z2202 is preferably in excess of 870 MPa, more preferably in excess of 900 MPa, still more preferably in excess of 920 MPa.

<Welding Conditions>

Preferable welding conditions when gas-shielded arc welding is performed using the above-described flux-cored wire for gas-shielded arc welding are described below.

(Heat Input)

The heat input is not particularly limited but is preferably 2.5 kJ/mm or less. If the heat input exceeds 2.5 kJ/mm, the cooling rate during welding decreases, and this causes a tendency that a coarse structure is readily formed and the toughness is reduced.

(Shielding Gas)

The shielding gas is not particularly limited, but a mixed gas containing 20 vol% or less of $CO_2$, with the remainder being Ar, is preferably used. If the $CO_2$ amount exceeds 20 vol%, there is a tendency that a coarse oxide is readily formed and the roughness is reduced.

(Preheating-Interpass Temperature)

The preheating-interpass temperature is not particularly limited but is preferably from 50 to 200°C. If the temperature falls below 50°C, cracking during welding tends to readily occur. In addition, if it exceeds 200°C, the cooling rate during welding decreases, and a coarse structure tends to be readily formed and the toughness tends to be reduced.

The base metal is not particularly limited as long as the effects of the present invention are obtained, and the base metal may be appropriately selected in consideration of the composition of the flux-cored wire for gas-shielded arc welding, the welding conditions, etc.

EXAMPLES

The effects of the present invention are specifically described below by referring to Examples and Comparative Examples, but the present invention is not limited thereto.

In the following, Examples 1 to 15, 17 to 61, and 63 to 65 are Examples for describing the technical effects of the first embodiment.

(Examples 1 to 15 and 17 to 35)

Flux-cored wires of Examples 1 to 35 having the chemical component composition shown in Table 1 below were manufactured with a wire diameter: 1.2 mm, a flux filling rate of 13.5%. The remainder of each flux-cored wire consists of iron and inevitable impurities. Furthermore, in Table 1, "Amount in terms of Si" means the amount in terms of Si in an Si alloy and an Si compound, and "Amount in terms of Ti" means the amount in terms of Ti in a Ti alloy and a Ti compound.

Table 1

| No. | Composition of Wire (mass%) | | | | | | | | | | | | | | | | | | (Ti+Mn +Al+Ca )/Si | Ca/Si |
|---|---|---|---|---|---|---|---|---|---|---|---|---|---|---|---|---|---|---|---|---|
| | C | Amount in terms of Si | Mn | Amount in terms of Ti | Al | Ca | Ni | Mo | B | Cu | Cr | Nb | V | Li+ Na+ K | Mg | F | $ZrO_2$ | $Al_2O_3$ | | |
| 1 | 0.13 | 0.31 | 2.6 | 3.1 | 0.038 | 0.041 | | 0.15 | 0.0028 | | | | | 0.09 | 0.46 | 0.21 | 0.52 | 0.53 | 18.5 | 0.13 |
| 2 | 0.08 | 0.71 | 3.7 | 4.1 | 0.049 | 0.070 | | 0.16 | 0.0039 | | | | | 0.07 | 0.41 | 0.26 | 0.10 | 0.53 | 11.2 | 0.10 |
| 3 | 0.05 | 0.61 | 3.9 | 3.6 | 0.030 | 0.054 | 2.5 | 0.13 | | | | | | 0.08 | 0.54 | 0.23 | 0.34 | 0.54 | 12.4 | 0.09 |
| 4 | 0.05 | 0.51 | 3.6 | 3.6 | 0.034 | 0.071 | 1.9 | 0.16 | | | | | | 0.08 | 0.42 | 0.19 | 0.29 | 0.39 | 14.4 | 0.14 |
| 5 | 0.07 | 0.36 | 2.7 | 3.4 | 0.028 | 0.039 | | 0.09 | 0.0039 | | | | | 0.05 | 0.46 | 0.22 | 0.16 | 0.49 | 17.2 | 0.11 |
| 6 | 0.06 | 0.26 | 2.7 | 3.4 | 0.031 | 0.058 | | 0.11 | 0.0031 | | | | | 0.08 | 0.54 | 0.16 | 0.25 | 0.19 | 24.2 | 0.23 |
| 7 | 0.04 | 0.21 | 2.6 | 2.8 | 0.027 | 0.041 | 1.8 | 0.12 | | | | | | 0.08 | 0.38 | 0.20 | 0.44 | 0.35 | 26.5 | 0.20 |
| 8 | 0.05 | 0.16 | 2.7 | 2.8 | 0.024 | 0.040 | | 0.17 | 0.0048 | | | | | 0.06 | 0.44 | 0.12 | 0.44 | 0.82 | 34.5 | 0.25 |
| 9 | 0.07 | 0.25 | 4.1 | 2.9 | 0.021 | 0.074 | 2.1 | 0.10 | | | | | | 0.05 | 0.55 | 0.08 | 0.10 | 0.01 | 28.3 | 0.30 |
| 10 | 0.05 | 0.37 | 2.7 | 4.6 | 0.030 | 0.040 | 1.8 | 0.12 | | | | | | 0.07 | 0.58 | 0.16 | 0.12 | 0.41 | 19.8 | 0.11 |
| 11 | 0.05 | 0.33 | 2.7 | 2.0 | 0.027 | 0.066 | 2.3 | 0.11 | | | | | | 0.06 | 0.52 | 0.27 | 0.10 | 0.36 | 14.4 | 0.20 |
| 12 | 0.07 | 0.41 | 2.6 | 3.3 | 0.066 | 0.034 | 2.0 | 0.11 | | | | | | 0.07 | 0.36 | 0.15 | 0.01 | 0.24 | 14.7 | 0.08 |
| 13 | 0.07 | 0.36 | 2.6 | 3.2 | 0.004 | 0.053 | | 0.17 | 0.0036 | | | | | 0.08 | 0.33 | 0.14 | 0.34 | 0.06 | 16.1 | 0.15 |
| 14 | 0.08 | 0.40 | 2.6 | 2.8 | 0.022 | 0.025 | 1.5 | 0.12 | | | | | | 0.08 | 0.44 | 0.15 | 0.22 | 0.50 | 13.5 | 0.06 |
| 15 | 0.07 | 0.22 | 2.6 | 2.8 | 0.029 | 0.090 | 1.8 | 0.12 | | | | | | 0.09 | 0.31 | 0.12 | 0.12 | 0.17 | 24.7 | 0.40 |
| 17 | 0.07 | 0.33 | 2.7 | 2.7 | 0.036 | 0.041 | 3.6 | 0.12 | | | | | | 0.07 | 0.35 | 0.22 | 0.20 | 0.52 | 16.5 | 0.12 |

Table 1 continued

| No. | Composition of Wire (mass%) | | | | | | | | | | | | | | | | | | | (Ti+Mn +Al+Ca )/Si | Ca/Si |
|---|---|---|---|---|---|---|---|---|---|---|---|---|---|---|---|---|---|---|---|---|---|
| | C | Amount in terms of Si | Mn | Amount in terms of Ti | Al | Ca | Ni | Mo | B | Cu | Cr | Nb | V | Li+ Na+ K | Mg | F | ZrO$_2$ | Al$_2$O$_3$ | | |
| 18 | 0.08 | 0.33 | 2.6 | 2.6 | 0.023 | 0.051 | 0.2 | 0.10 | | | | | | 0.05 | 0.31 | 0.12 | 0.10 | 0.27 | 15.8 | 0.15 |
| 19 | 0.07 | 0.32 | 2.7 | 3.1 | 0.031 | 0.058 | | 0.29 | 0.0026 | | | | | 0.06 | 0.43 | 0.13 | 0.20 | 0.34 | 18.2 | 0.18 |
| 20 | 0.06 | 0.35 | 2.6 | 3.4 | 0.029 | 0.040 | | 0.15 | 0.0130 | | | | | 0.06 | 0.55 | 0.22 | 0.12 | 0.27 | 17.2 | 0.11 |
| 21 | 0.06 | 0.35 | 2.7 | 3.1 | 0.036 | 0.041 | | 0.16 | 0.0002 | | | | | 0.07 | 0.43 | 0.25 | 0.29 | 0.23 | 16.7 | 0.12 |
| 22 | 0.08 | 0.27 | 2.6 | 2.8 | 0.023 | 0.069 | 1.9 | 0.13 | | | | | | 0.06 | 0.49 | 0.17 | 0.06 | 0.51 | 20.0 | 0.25 |
| 23 | 0.07 | 0.35 | 2.7 | 3.2 | 0.025 | 0.075 | 2.1 | 0.12 | | | | | | 0.08 | 0.45 | 0.27 | 0.13 | 0.43 | 17.0 | 0.21 |
| 24 | 0.05 | 0.34 | 2.6 | 3.3 | 0.028 | 0.077 | 1.9 | 0.11 | | | | | | 0.09 | 0.49 | 0.25 | 0.23 | 0.42 | 17.5 | 0.22 |
| 25 | 0.07 | 0.29 | 2.6 | 3.0 | 0.031 | 0.086 | 2.0 | | | | | | | 0.08 | 0.33 | 0.23 | 0.22 | 0.37 | 19.7 | 0.30 |
| 26 | 0.05 | 0.27 | 2.7 | 2.7 | 0.031 | 0.044 | | | 0.0026 | | | | | 0.08 | 0.43 | 0.15 | 0.08 | 0.23 | 20.2 | 0.16 |
| 27 | 0.05 | 0.33 | 2.6 | 2.9 | 0.023 | 0.080 | | 0.18 | 0.0018 | | | | | 0.08 | 0.36 | 0.08 | 0.44 | 0.17 | 16.9 | 0.24 |
| 28 | 0.06 | 0.31 | 2.6 | 2.8 | 0.038 | 0.079 | 2.0 | 0.20 | | | | | | 0.05 | 0.56 | 0.18 | 0.40 | 0.10 | 17.9 | 0.26 |
| 29 | 0.07 | 0.28 | 2.6 | 3.0 | 0.038 | 0.061 | 2.2 | 0.10 | | | | | | 0.06 | 0.40 | 0.23 | 0.28 | 0.26 | 20.3 | 0.22 |
| 30 | 0.08 | 0.61 | 2.8 | 2.5 | 0.035 | 0.076 | 1.8 | 0.12 | | | | | | 0.08 | 0.54 | 0.15 | 0.09 | 0.38 | 8.8 | 0.12 |
| 31 | 0.05 | 0.33 | 2.6 | 3.0 | 0.030 | 0.080 | 1.9 | 0.18 | | | | | | 0.08 | 0.58 | 0.16 | 0.26 | 0.42 | 17.4 | 0.24 |
| 32 | 0.07 | 0.31 | 2.6 | 3.0 | 0.036 | 0.046 | 1.8 | 0.18 | | 0.13 | | | | 0.08 | 0.37 | 0.09 | 0.38 | 0.39 | 18.4 | 0.15 |
| 33 | 0.05 | 0.34 | 2.6 | 3.3 | 0.027 | 0.041 | | 0.10 | 0.0037 | | 0.11 | | | 0.07 | 0.40 | 0.19 | 0.07 | 0.10 | 17.4 | 0.12 |
| 34 | 0.05 | 0.43 | 2.6 | 2.8 | 0.023 | 0.060 | | 0.14 | 0.0037 | | | 0.010 | | 0.06 | 0.55 | 0.09 | 0.32 | 0.42 | 12.8 | 0.14 |
| 35 | 0.05 | 0.33 | 2.6 | 2.6 | 0.021 | 0.083 | | 0.14 | 0.0030 | | | | 0.009 | 0.07 | 0.56 | 0.20 | 0.24 | 0.50 | 16.2 | 0.25 |

A 20° V groove was formed in an SM490A steel sheet having a thickness of 20 mm, and gas-shielded arc welding was performed under the following conditions by using a flux-cored wire of each of Examples.

Shielding gas: 20% $CO_2$-80% Ar mixed gas

Polarity: DCEP (direct current electrode positive)

Current-voltage-speed: 280 A-29 V-35 cpm

Heat input: 1.4 kJ/mm

Preheating temperature: 100°C-110°C

Interpass temperature: 140°C-160°C

Buildup procedure: 7 layers, 14 passes

Welding position: flat

The chemical component composition of the obtained weld metal according to each of Examples is shown in Table 2. The remainder of each weld metal consists of iron and inevitable impurities. In addition, the average composition of oxide-based inclusions having a minor diameter of 1 μm or more contained in the weld metal according to each of Examples and, with respect to the average composition, $Al_2O_3$+$SiO_2$+MnO+$TiO_2$+CaO, ($TiO_2$+MnO+$Al_2O_3$+CaO)/$SiO_2$ and CaO/$SiO_2$ are shown in Table 3. The remainder of the average composition of oxide-based inclusions having a minor diameter of 1 μm or more contained in the weld metal according to each of Examples consists of inevitable oxides and inevitable fluorides. Furthermore, the average composition of oxide-based inclusions having a minor diameter of 1 μm or more contained in the weld metal according to each of Examples was quantitatively analyzed by observing a polished surface of a micro sample, which was cut out from the weld metal, by means of an Electron Probe X-ray Micro Analyzer (EPMA, trade name: "JXA-8500F") manufactured by JEOL Datum Ltd. Details are as follows. The observation area at the polished surface of the micro sample was set to be 100 mm$^2$, and the composition in the central part of an inclusion was quantitatively analyzed by characteristic X-ray wavelength dispersion spectrometry. Elements to be analyzed were Al, Si, Ti, Mg, Mn, Zr, Na, K, Cr and O (oxygen). After the relationship between the X-ray intensity of each element and the concentration of the element was previously determined as a calibration curve by using a known substance, the elements contained in each inclusion were quantitatively determined from the obtained X-ray intensity of the above-described inclusion to be analyzed and the calibration curve, and the composition of the inclusion was determined by arithmetic averaging of the results. Out of inclusions quantitatively determined in this way, an inclusion having an oxygen (O) content of 5 mass% or more is defined as an oxide-based inclusion. At this time, when a plurality of elements are observed in one oxide-based inclusion, the oxide composition was calculated from the ratio of the X-ray intensities showing existence of those elements by performing conversion to a single oxide of each element. In the present invention, values converted to mass as the above-described single oxides were averaged to determine the oxide composition.

Table 2

| No. | Composition of Weld Metal (mass%) | | | | | | | | | | | | | | |
| --- | C | Si | Mn | Ti | Al | Ca | O | N | Ni | Mo | B | Cu | Cr | Nb | V |
| 1 | 0.13 | 0.21 | 1.70 | 0.055 | 0.006 | 0.0004 | 0.048 | 0.003 | | 0.18 | 0.0015 | | | | |
| 2 | 0.08 | 0.52 | 2.65 | 0.095 | 0.009 | 0.0007 | 0.042 | 0.004 | | 0.15 | 0.0024 | | | | |
| 3 | 0.07 | 0.41 | 2.71 | 0.088 | 0.005 | 0.0005 | 0.051 | 0.003 | 2.63 | 0.12 | | | | | |
| 4 | 0.06 | 0.32 | 2.45 | 0.076 | 0.006 | 0.0007 | 0.052 | 0.005 | 2.11 | 0.16 | | | | | |
| 5 | 0.07 | 0.25 | 1.67 | 0.072 | 0.005 | 0.0004 | 0.046 | 0.003 | | 0.11 | 0.0026 | | | | |
| 6 | 0.07 | 0.17 | 1.94 | 0.063 | 0.005 | 0.0005 | 0.043 | 0.004 | | 0.14 | 0.0017 | | | | |
| 7 | 0.06 | 0.13 | 1.71 | 0.055 | 0.005 | 0.0004 | 0.053 | 0.003 | 2.15 | 0.13 | | | | | |
| 8 | 0.07 | 0.09 | 1.87 | 0.055 | 0.004 | 0.0004 | 0.050 | 0.003 | | 0.19 | 0.0025 | | | | |
| 9 | 0.08 | 0.20 | 3.06 | 0.056 | 0.004 | 0.0007 | 0.045 | 0.005 | 2.31 | 0.12 | | | | | |
| 10 | 0.06 | 0.25 | 1.63 | 0.110 | 0.005 | 0.0004 | 0.040 | 0.003 | 2.13 | 0.15 | | | | | |
| 11 | 0.06 | 0.22 | 1.57 | 0.028 | 0.005 | 0.0006 | 0.049 | 0.005 | 2.67 | 0.13 | | | | | |
| 12 | 0.08 | 0.26 | 1.51 | 0.061 | 0.011 | 0.0003 | 0.052 | 0.005 | 2.38 | 0.10 | | | | | |
| 13 | 0.07 | 0.27 | 1.66 | 0.064 | 0.001 | 0.0005 | 0.047 | 0.003 | | 0.18 | 0.0021 | | | | |
| 14 | 0.08 | 0.30 | 1.52 | 0.061 | 0.004 | 0.0002 | 0.051 | 0.003 | 2.02 | 0.15 | | | | | |
| 15 | 0.08 | 0.12 | 1.91 | 0.066 | 0.005 | 0.0009 | 0.055 | 0.003 | 2.18 | 0.12 | | | | | |
| 17 | 0.07 | 0.22 | 1.87 | 0.057 | 0.006 | 0.0004 | 0.044 | 0.004 | 3.54 | 0.16 | | | | | |
| 18 | 0.08 | 0.28 | 1.68 | 0.059 | 0.004 | 0.0005 | 0.045 | 0.005 | 0.25 | 0.14 | | | | | |
| 19 | 0.08 | 0.21 | 1.82 | 0.059 | 0.005 | 0.0005 | 0.046 | 0.004 | | 0.32 | 0.0017 | | | | |
| 20 | 0.07 | 0.28 | 1.51 | 0.064 | 0.005 | 0.0004 | 0.054 | 0.004 | | 0.15 | 0.0072 | | | | |
| 21 | 0.07 | 0.24 | 1.59 | 0.057 | 0.006 | 0.0004 | 0.053 | 0.004 | | 0.15 | 0.0004 | | | | |
| 22 | 0.08 | 0.28 | 1.70 | 0.057 | 0.004 | 0.0007 | 0.053 | 0.003 | 2.06 | 0.14 | | | | | |
| 23 | 0.08 | 0.29 | 1.79 | 0.060 | 0.004 | 0.0007 | 0.041 | 0.004 | 2.43 | 0.13 | | | | | |
| 24 | 0.06 | 0.30 | 1.85 | 0.069 | 0.005 | 0.0007 | 0.046 | 0.003 | 2.22 | 0.13 | | | | | |
| 25 | 0.07 | 0.24 | 1.75 | 0.067 | 0.005 | 0.0008 | 0.050 | 0.005 | 2.17 | | | | | | |

(continued)

| No. | Composition of Weld Metal (mass%) | | | | | | | | | | | | | | |
|-----|------|------|------|-------|-------|--------|-------|-------|------|------|--------|------|------|-------|-------|
| | C | Si | Mn | Ti | Al | Ca | O | N | Ni | Mo | B | Cu | Cr | Nb | V |
| 26 | 0.06 | 0.21 | 1.87 | 0.055 | 0.005 | 0.0004 | 0.040 | 0.004 | | | 0.0015 | | | | |
| 27 | 0.06 | 0.22 | 1.89 | 0.065 | 0.004 | 0.0008 | 0.051 | 0.005 | | 0.18 | 0.0016 | | | | |
| 28 | 0.07 | 0.27 | 1.58 | 0.065 | 0.006 | 0.0008 | 0.052 | 0.003 | 2.41 | 0.19 | | | | | |
| 29 | 0.07 | 0.23 | 1.62 | 0.059 | 0.006 | 0.0006 | 0.045 | 0.003 | 2.45 | 0.11 | | | | | |
| 30 | 0.08 | 0.41 | 1.15 | 0.035 | 0.006 | 0.0007 | 0.044 | 0.004 | 2.03 | 0.13 | | | | | |
| 31 | 0.06 | 0.22 | 1.51 | 0.055 | 0.005 | 0.0008 | 0.048 | 0.004 | 2.01 | 0.19 | | | | | |
| 32 | 0.08 | 0.21 | 1.89 | 0.064 | 0.006 | 0.0004 | 0.047 | 0.005 | 2.16 | 0.18 | | 0.14 | | | |
| 33 | 0.06 | 0.29 | 1.57 | 0.069 | 0.005 | 0.0004 | 0.044 | 0.005 | | 0.11 | 0.0024 | | 0.12 | | |
| 34 | 0.06 | 0.30 | 1.73 | 0.056 | 0.004 | 0.0006 | 0.047 | 0.003 | | 0.15 | 0.0026 | | | 0.011 | |
| 35 | 0.07 | 0.29 | 1.99 | 0.058 | 0.004 | 0.0008 | 0.047 | 0.005 | | 0.17 | 0.0021 | | | | 0.009 |

Table 3

| No. | Average Composition of Oxide-Based Inclusions with Minor Diameter of 1 μm or more in Weld Metal (mass%) | | | | | Requirements | | |
|---|---|---|---|---|---|---|---|---|
| | $Al_2O_3$ | $SiO_2$ | MnO | $TiO_2$ | CaO | $Al_2O_3+SiO_2+MnO+TiO_2+CaO$ | $(TiO_2+MnO+Al_2O_3+CaO)/SiO_2$ | $CaO/SiO_2$ |
| 1 | 10 | 5 | 21 | 44 | 4 | 84.0 | 15.8 | 0.8 |
| 2 | 14 | 16 | 29 | 18 | 5 | 82.0 | 4.1 | 0.3 |
| 3 | 6 | 13 | 35 | 40 | 4 | 97.9 | 6.5 | 0.3 |
| 4 | 10 | 11 | 34 | 38 | 8 | 101.0 | 8.2 | 0.7 |
| 5 | 8 | 6 | 23 | 53 | 3 | 93.4 | 14.6 | 0.5 |
| 6 | 9 | 4 | 23 | 58 | 4 | 97.6 | 23.4 | 1.0 |
| 7 | 9 | 3 | 25 | 47 | 4 | 88.2 | 28.4 | 1.3 |
| 8 | 6 | 2 | 28 | 45 | 3 | 84.1 | 41.1 | 1.5 |
| 9 | 5 | 5 | 43 | 36 | 8 | 97.0 | 18.4 | 1.6 |
| 10 | 7 | 6 | 22 | 59 | 3 | 97.1 | 15.2 | 0.5 |
| 11 | 9 | 7 | 23 | 45 | 6 | 90.0 | 11.9 | 0.9 |
| 12 | 21 | 7 | 20 | 36 | 3 | 87.0 | 11.4 | 0.4 |
| 13 | 1 | 5 | 17 | 53 | 6 | 81.9 | 15.4 | 1.2 |
| 14 | 7 | 10 | 18 | 46 | 2 | 83.0 | 7.3 | 0.2 |
| 15 | 6 | 2 | 26 | 38 | 10 | 82.1 | 40.1 | 5.0 |
| 17 | 10 | 5 | 27 | 39 | 3 | 84.0 | 15.8 | 0.6 |
| 18 | 6 | 6 | 18 | 59 | 3 | 91.5 | 14.3 | 0.5 |
| 19 | 10 | 5 | 22 | 57 | 4 | 97.5 | 18.5 | 0.8 |
| 20 | 7 | 6 | 19 | 60 | 4 | 96.4 | 15.1 | 0.7 |
| 21 | 11 | 6 | 16 | 49 | 3 | 85.0 | 13.2 | 0.5 |
| 22 | 6 | 6 | 23 | 48 | 8 | 90.5 | 14.1 | 1.3 |
| 23 | 5 | 6 | 26 | 39 | 9 | 84.7 | 13.1 | 1.5 |
| 24 | 9 | 6 | 21 | 47 | 8 | 90.6 | 14.1 | 1.3 |
| 25 | 10 | 7 | 21 | 51 | 10 | 99.0 | 13.1 | 1.4 |
| 26 | 9 | 6 | 22 | 52 | 5 | 94.3 | 14.7 | 0.8 |
| 27 | 7 | 6 | 26 | 37 | 10 | 85.9 | 13.3 | 1.7 |
| 28 | 9 | 6 | 18 | 50 | 7 | 89.5 | 13.9 | 1.2 |
| 29 | 11 | 6 | 18 | 42 | 7 | 84.0 | 13.0 | 1.2 |
| 30 | 6 | 16 | 14 | 36 | 5 | 77.0 | 3.8 | 0.3 |
| 31 | 10 | 6 | 20 | 39 | 9 | 84.0 | 13.0 | 1.5 |
| 32 | 9 | 6 | 28 | 44 | 3 | 89.9 | 14.0 | 0.5 |
| 33 | 9 | 6 | 16 | 50 | 3 | 84.0 | 13.0 | 0.5 |
| 34 | 6 | 8 | 23 | 51 | 6 | 93.8 | 10.7 | 0.8 |
| 35 | 5 | 6 | 30 | 49 | 7 | 96.6 | 15.1 | 1.2 |

With respect to each of the obtained weld metals, various performances (strength, low-temperature toughness) were evaluated by the following evaluation tests. These evaluation results are shown in Table 4.

(Strength)

A tensile test piece in conformity with JIS Z2202 was sampled from the central part of the weld metal in parallel to the weld line and subjected to a tensile test, and those having a tensile strength in excess of 490 MPa were judged to be passed.

(Low-Temperature Toughness)

A Charpy impact test piece (JIS Z3111 No. 4 V-notched specimen) was sampled vertically to the weld line direction from a thickness central part of the weld metal, and the energy absorption and the brittle fracture rate at -40°C were measured in a manner prescribed in JIS Z2242. Those having, as the average value of three measurements, an absorption energy at -40°C of 47 J or more and a brittle fracture rate of 20% or less were judged to have excellent low-temperature toughness.

In addition, when formation of convex bead shape in vertical position, formation of blowhole, deterioration of bead wettability, generation of spatter, deterioration of bead smoothness, deterioration of porosity resistance, deterioration of welding workability, occurrence of high-temperature cracking, etc., took place, these are shown together as other properties in Table 4.

Table 4

| No. | Tensile Strength | Brittle Fracture Rate (-40°C) | Absorption Energy (-40°C) | Other Properties |
|---|---|---|---|---|
| 1 | 817 | 43 | 33 | formation of convex bead shape in vertical position |
| 2 | 842 | 33 | 25 | good |
| 3 | 889 | 16 | 63 | good |
| 4 | 810 | 7 | 81 | good |
| 5 | 672 | 0 | 95 | good |
| 6 | 692 | 6 | 92 | good |
| 7 | 701 | 13 | 87 | good |
| 8 | 695 | 17 | 62 | blowhole, deterioration of bead wettability, generation of spatter |
| 9 | 926 | 91 | 12 | deterioration of bead smoothness |
| 10 | 754 | 38 | 41 | good |
| 11 | 633 | 23 | 40 | formation of convex bead shape in vertical position, deterioration of porosity resistance |
| 12 | 741 | 55 | 26 | deterioration of bead smoothness |
| 13 | 678 | 15 | 59 | blowhole, deterioration of bead smoothness |
| 14 | 739 | 24 | 48 | good |
| 15 | 773 | 31 | 30 | good |
| 17 | 814 | 14 | 59 | occurrence of high-temperature cracking |
| 18 | 683 | 27 | 29 | good |
| 19 | 734 | 16 | 61 | good |
| 20 | 717 | 11 | 66 | occurrence of high-temperature cracking |
| 21 | 641 | 24 | 37 | good |
| 22 | 759 | 0 | 98 | good |

(continued)

| No. | Tensile Strength | Brittle Fracture Rate (-40°C) | Absorption Energy (-40°C) | Other Properties |
|---|---|---|---|---|
| 23 | 784 | 0 | 102 | good |
| 24 | 735 | 0 | 93 | good |
| 25 | 719 | 12 | 68 | good |
| 26 | 637 | 0 | 105 | good |
| 27 | 671 | 0 | 107 | good |
| 28 | 742 | 7 | 81 | good |
| 29 | 732 | 0 | 95 | good |
| 30 | 700 | 31 | 28 | good |
| 31 | 688 | 0 | 104 | good |
| 32 | 787 | 2 | 100 | good |
| 33 | 636 | 0 | 98 | good |
| 34 | 665 | 7 | 83 | good |
| 35 | 718 | 8 | 80 | good |

In Example 1, the C amount in the wire was as high as 0.13%, the C amount in the weld metal was as high as 0.13% and therefore, the low-temperature toughness was poor. Furthermore, since the $ZrO_2$ amount in the wire was as high as 0.52%, formation of a convex bead shape in a vertical position was observed.

In Example 2, the amount in terms of Si in the wire was as high as 0.71%, (Ti+Mn+Al+Ca)/Si in the wire was as low as 11.2, the Si amount in the weld metal was as high as 0.52%, $(TiO_2+MnO+Al_2O_3+CaO)/SiO_2$ in the average composition of oxide-based inclusions having a minor diameter of 1 $\mu$m or more contained in the weld metal was as low as 4.1 and therefore, the low-temperature toughness was poor.

In Example 8, the amount in terms of Si in the wire was as low as 0.16%, the Si amount in the weld metal was as low as 0.09% and therefore, a blowhole was formed. Furthermore, since the $Al_2O_3$ amount in the wire was as high as 0.82%, bead wettability was deteriorated and spatter was generated.

In Example 9, the Mn amount in the wire was as high as 4.1%, the Mn amount in the weld metal was as high as 3.06 mass% and therefore, the low-temperature toughness was poor. Furthermore, since the $Al_2O_3$ amount in the wire was as low as 0.01%, bead smoothness was deteriorated.

In Example 10, the amount in terms of Ti in the wire was as high as 4.6%, the Ti amount in the weld metal was as high as 0.110% and therefore, the low-temperature toughness was poor.

In Example 11, since the amount in terms of Ti in the wire was as low as 2.0% and the Ti amount in the weld metal was as low as 0.028%, the low-temperature toughness was poor, formation of a convex bead shape in a vertical position was observed, and the porosity resistance was deteriorated.

In Example 12, the Al amount in the wire was as high as 0.066%, the Al amount in the weld metal was as high as 0.011% and therefore, the low-temperature toughness was poor. Furthermore, since the $ZrO_2$ amount in the wire was as high as 0.01%, the bead smoothness was deteriorated.

In Example 13, since the Al amount in the wire was as low as 0.004% and the Al amount in the weld metal was as low as 0.001%, a blowhole was formed and the bead smoothness was deteriorated.

In Example 14, the Ca amount in the wire was as low as 0.025%, Ca/Si in the wire was as low as 0.06, the Ca amount in the weld metal was as low as 0.0002% and therefore, the low-temperature toughness was poor.

In Example 15, Ca/Si in the wire was as high as 0.40, $CaO/SiO_2$ in the average composition of oxide-based inclusions having a minor diameter of 1 $\mu$m or more contained in the weld metal was as high as 5.0 and therefore, the low-temperature toughness was poor.

In Example 17, the Ni amount in the wire was as high as 3.6%, the Ni amount in the weld metal was as high as 3.54% and therefore, high-temperature cracking occurred.

In Example 18, the Ni amount in the wire was as low as 0.2%, the Ni amount in the weld metal was as low as 0.25% and therefore, the low-temperature toughness was poor.

In Example 20, the B amount in the wire was as high as 0.0130%, the B amount in the weld metal was as high as 0.0072% and therefore, high-temperature cracking occurred.

In Example 21, the B amount in the wire was as low as 0.0002%, the B amount in the weld metal was as low as 0.0004% and therefore, the low-temperature toughness was poor.

In Example 30, (Ti+Mn+Al+Ca)/Si in the wire was as low as 8.8, $(TiO_2+MnO+Al_2O_3+CaO)/SiO_2$ in the average composition of oxide-based inclusions having a minor diameter of 1 $\mu$m or more contained in the weld metal was as low as 3.8 and therefore, the low-temperature toughness was poor.

On the other hand, the weld metals of Examples 3 to 7, 19, 22 to 29, and 31 to 35 had excellent low-temperature toughness as well as good other properties.

(Examples 36 to 61 and 63 to 65)

Flux-cored wires of Examples 36 to 61 and 63 to 65 having the chemical component composition shown in Table 5 below were manufactured with a wire diameter: 1.2 mm at a flux filling rate of 13.5%. In Table 5, amount in terms of Si indicates the amount in terms of Si in an Si alloy and an Si compound, and amount in terms of Ti indicates the amount in terms of Ti in a Ti alloy and a Ti compound.

Table 5

| No. | C | Amount in terms of Si | Mn | Amount in terms of Ti | Al | Ca | Ni | B | Cu | Cr | Mo | Nb | V | ZrO₂ | Al₂O₃ | Li+ K+Na | Mg | F | Fe and Impurities | (Ti+Mn+ Al+Ca) /Si | Ca/Si |
|---|---|---|---|---|---|---|---|---|---|---|---|---|---|---|---|---|---|---|---|---|---|
| 36 | 0.07 | 0.30 | 2.3 | 3.4 | 0.034 | 0.062 | 2.5 | 0.0026 | | | | | | | | | | | 91.3 | 19.3 | 0.21 |
| 37 | 0.06 | 0.29 | 2.4 | 3.9 | 0.018 | 0.058 | 2.4 | 0.0025 | | | | | 0.25 | | | | | | 90.6 | 22.0 | 0.20 |
| 38 | 0.06 | 0.30 | 2.1 | 3.8 | 0.046 | 0.062 | 2.3 | 0.0021 | 0.02 | | | | 0.010 | 0.10 | 0.33 | 0.06 | | | 90.8 | 20.0 | 0.21 |
| 39 | 0.07 | 0.26 | 2.4 | 3.8 | 0.010 | 0.034 | 2.5 | 0.0028 | 0.01 | 0.03 | 0.15 | | 0.010 | 0.35 | 0.30 | 0.05 | 0.30 | | 89.7 | 24.0 | 0.13 |
| 40 | 0.08 | 0.25 | 1.7 | 3.4 | 0.046 | 0.040 | 2.3 | 0.0062 | 0.03 | 0.07 | 0.15 | | 0.010 | 0.17 | 0.54 | 0.04 | 0.38 | 0.24 | 90.5 | 20.7 | 0.16 |
| 41 | 0.07 | 0.22 | 2.4 | 3.2 | 0.032 | 0.045 | 2.4 | 0.0024 | 0.04 | | 0.15 | | 0.010 | 0.26 | 0.35 | 0.05 | 0.11 | 0.25 | 90.4 | 25.8 | 0.20 |
| 42 | 0.10 | 0.37 | 2.9 | 3.4 | 0.020 | 0.080 | 1.8 | 0.0031 | 0.02 | 0.09 | | 0.005 | 0.010 | 0.39 | 0.08 | 0.06 | 0.26 | 0.28 | 90.1 | 17.3 | 0.22 |
| 43 | 0.09 | 0.50 | 2.9 | 3.4 | 0.010 | 0.103 | 1.3 | 0.0010 | 0.02 | 0.13 | 0.13 | | 0.010 | 0.18 | 0.08 | 0.04 | 0.55 | 0.03 | 90.7 | 12.8 | 0.21 |
| 44 | 0.05 | 0.30 | 1.5 | 2.4 | 0.016 | 0.062 | 2.2 | 0.0059 | 0.23 | | 0.28 | | 0.010 | 0.26 | 0.08 | 0.06 | 0.55 | 0.18 | 91.8 | 13.3 | 0.21 |
| 45 | 0.08 | 0.21 | 2.4 | 3.7 | 0.020 | 0.045 | 2.7 | 0.0020 | 0.05 | 0.24 | 0.14 | | 0.010 | 0.25 | 0.35 | 0.25 | 0.55 | 0.25 | 88.8 | 29.4 | 0.21 |
| 46 | 0.03 | 0.38 | 3.4 | 3.8 | 0.011 | 0.034 | 2.8 | 0.0018 | 0.03 | 0.78 | 0.16 | 0.009 | 0.010 | 0.13 | 0.45 | 0.07 | 0.55 | 0.18 | 87.2 | 19.1 | 0.09 |
| 47 | 0.09 | 0.55 | 2.8 | 3.7 | 0.013 | 0.114 | 2.2 | 0.0028 | 0.32 | 0.10 | 0.05 | | 0.011 | 0.46 | 0.52 | 0.05 | 0.67 | 0.25 | 88.1 | 12.0 | 0.21 |
| 48 | 0.10 | 0.31 | 1.4 | 2.9 | 0.015 | 0.045 | 3.2 | 0.0008 | 0.02 | 0.09 | 0.22 | | 0.009 | 0.33 | 0.56 | 0.05 | 0.44 | 0.25 | 90.1 | 14.1 | 0.15 |
| 49 | 0.06 | 0.49 | 2.6 | 3.2 | 0.005 | 0.132 | 2.5 | 0.0021 | 0.14 | 0.08 | 0.11 | | 0.014 | 0.10 | 0.41 | 0.06 | 0.59 | 0.23 | 89.3 | 12.1 | 0.27 |
| 50 | 0.10 | 0.40 | 2.3 | 2.8 | 0.034 | 0.140 | 1.0 | 0.0029 | 0.02 | 0.26 | 0.06 | 0.011 | 0.009 | 0.05 | 0.64 | 0.05 | 0.45 | 0.27 | 91.4 | 13.2 | 0.35 |
| 51 | 0.08 | 0.40 | 2.5 | 3.6 | 0.008 | 0.080 | 2.1 | 0.0027 | 0.01 | 0.84 | | | 0.006 | 0.17 | 0.60 | 0.06 | 0.38 | 0.21 | 89.0 | 15.5 | 0.20 |
| 52 | 0.01 | 0.66 | 2.5 | 3.2 | 0.008 | 0.114 | 2.2 | 0.0105 | 0.01 | | 0.04 | | 0.022 | 0.28 | 0.50 | 0.06 | 0.27 | 0.17 | 89.9 | 8.8 | 0.17 |
| 53 | 0.07 | 0.71 | 2.6 | 4.2 | 0.023 | 0.081 | 2.2 | 0.0031 | 0.01 | 0.02 | 0.12 | | 0.010 | 0.39 | 0.42 | 0.05 | 0.23 | 0.16 | 88.7 | 9.7 | 0.11 |
| 54 | 0.06 | 0.25 | 2.0 | 4.4 | 0.086 | 0.075 | 2.2 | 0.0030 | 0.01 | 0.02 | 0.02 | | 0.010 | 0.14 | 0.52 | 0.05 | 0.22 | 0.13 | 89.8 | 26.2 | 0.30 |
| 55 | 0.07 | 0.39 | 2.7 | 3.4 | 0.028 | 0 | 2.2 | 0.0028 | 0.01 | 0.02 | 0.15 | | 0.009 | 0.40 | 0.59 | 0.05 | 0.52 | 0.29 | 89.2 | 15.7 | 0.00 |
| 56 | 0.14 | 0.45 | 2.2 | 3.4 | 0.016 | 0.062 | 2.2 | 0.0035 | 0.01 | | 0.14 | | 0.008 | 0.18 | 0.33 | 0.05 | 0.55 | 0.14 | 90.1 | 12.6 | 0.14 |
| 57 | 0.07 | 0.18 | 2.6 | 2.2 | 0.019 | 0.035 | 2.4 | 0.0005 | 0.01 | | 0.15 | | 0.010 | 0.27 | 0.40 | 0.07 | 0.32 | 0.11 | 91.2 | 27.0 | 0.19 |
| 58 | 0.06 | 0.15 | 2.4 | 3.6 | 0.027 | 0.031 | 0.8 | 0.0030 | 0.01 | | 0.14 | | 0.009 | 0.25 | 0.30 | 0.05 | 0.59 | 0.25 | 91.3 | 40.4 | 0.21 |
| 59 | 0.08 | 0.35 | 2.6 | 3.4 | 0.021 | 0.133 | 3.6 | 0.0027 | 0.01 | | 0.14 | | 0.012 | 0.32 | 0.35 | 0.05 | 0.39 | 0.27 | 88.3 | 17.6 | 0.38 |

| No. | C | Amount in terms of Si | Mn | Amount in terms of Ti | Al | Ca | Ni | B | Cu | Cr | Mo | Nb | V | ZrO$_2$ | Al$_2$O$_3$ | Li+ K+Na | Mg | F | Fe and Impurities | (Ti+Mn+ Al+Ca) /Si | Ca/Si |
|---|---|---|---|---|---|---|---|---|---|---|---|---|---|---|---|---|---|---|---|---|---|
| 60 | 0.07 | 0.31 | 0.9 | 2.8 | 0.025 | 0.065 | 2.1 | 0.0024 | 0.02 | | 0.13 | | 0.007 | 0.39 | 0.57 | 0.04 | 0.37 | 0.16 | 92.0 | 12.2 | 0.21 |
| 61 | 0.08 | 0.68 | 2.6 | 3.0 | 0.027 | 0.044 | 2.3 | 0.0024 | 0.01 | | 0.15 | | 0.006 | 0.24 | 0.43 | 0.04 | 0.20 | 0.21 | 90.0 | 8.3 | 0.06 |
| 63 | 0.05 | 0.68 | 1.4 | 1.8 | 0.026 | 0.082 | 2.1 | 0.0024 | 0.01 | 0.03 | | | 0.009 | 0.38 | 0.31 | 0.04 | 0.25 | 0.21 | 92.6 | 4.9 | 0.12 |
| 64 | 0.10 | 0.30 | 1.9 | 2.8 | 0.014 | 0.044 | 2.4 | 0.0005 | 0.02 | | 0.15 | | 0.009 | 0.38 | 0.54 | 0.06 | 0.41 | 0.22 | 90.7 | 15.9 | 0.15 |
| 65 | 0.10 | 0.40 | 2.4 | 2.8 | 0.015 | 0.041 | 0.8 | 0.0022 | 0.02 | | 0.06 | | 0.009 | 0.05 | 0.64 | 0.05 | 0.45 | 0.27 | 91.9 | 13.1 | 0.10 |

A 20° V groove was formed in an SM490A steel sheet having a thickness of 20 mm, and gas-shielded arc welding was performed under the following conditions by using a flux-cored wire of each of Examples.

Shielding gas: A 20% $CO_2$-80% Ar mixed gas

Polarity: DCEP (direct current electrode positive)

Current-voltage-speed: 280 A-29 V-35 cpm

Heat input: 1.4 kJ/mm

Preheating temperature: 100°C-110°C

Interpass temperature: 140°C-160°C

Buildup procedure: 7 layers, 14 passes

Welding position: flat

The chemical component composition of the obtained weld metal according to each of Examples is shown in Table 6. The remainder of each weld metal consists of iron and inevitable impurities. In addition, with respect to the average composition of oxide-based inclusions having a minor diameter of 1 $\mu$m or more contained in the weld metal according to each of Examples, $Al_2O_3$+$SiO_2$+MnO+$TiO_2$+CaO, ($TiO_2$+MnO+$Al_2O_3$+CaO)/$SiO_2$ and CaO/$SiO_2$ are shown in Table 6. The remainder of the average composition of oxide-based inclusions having a minor diameter of 1 $\mu$m or more contained in the weld metal according to each of Examples consists of inevitable oxides and inevitable fluorides.

In addition, the rate of acicular ferrite formation in the weld metal was measured as followings. First, the weld metal was cut at a surface perpendicular to the welding direction and etched with nital (nitric acid:ethanol=5:95). Subsequently, a range of 165 $\mu$m$\times$219 $\mu$m of the unmodified portion of the final pass was photographed by an optical microscope at a magnification of 400 in four visual fields and out of inclusion particles on the photograph, those having an equivalent-circle diameter of 1.5 $\mu$m or more were selected. Then, a structure extending radially from an inclusion particle was defined as acicular ferrite, and the rate of acicular ferrite formation (%) was measured based on the following formula:

$$\text{Rate of acicular ferrite formation (\%)} = (\text{number of inclusions acting as a start point of acicular ferrite/number of all inclusions}) \times 100$$

With respect to the obtained weld metal, the low-temperature toughness was evaluated by the following evaluation test.

More specifically, a Charpy impact test piece (JIS Z3111 No. 4 V-notched specimen) was sampled vertically to the weld line direction from a thickness central part of the weld metal and measured for the energy absorption (vE-$_{60}$) and the brittle fracture rate at -60°C in a manner prescribed in JIS Z2242. The evaluation results are shown in Table 6. Those having, as the average value of three measurements, an absorption energy at -60°C of 60 J or more and a brittle fracture rate of 33% or less were judged to have excellent low-temperature toughness.

In addition, the evaluations results about the welding workability are shown together in Table 6.

Furthermore, vertical upward welding was separately conducted using the wire according to each of Examples, and the welding workability was rated as "Passed" when a good bead shape was formed, and rated as "Failed" when a convex bead was formed. The evaluation results are shown in Table 6.

Table 6

| No. | C | Si | Mn | Ti | Al | Ca | Ni | B | N | O | Cu | Cr | Mo | Nb | V |
|---|---|---|---|---|---|---|---|---|---|---|---|---|---|---|---|
| 36 | 0.071 | 0.22 | 1.72 | 0.066 | 0.008 | 0.0005 | 2.70 | 0.0018 | 0.0045 | 0.050 | | | | | |
| 37 | 0.065 | 0.27 | 1.78 | 0.082 | 0.005 | 0.0005 | 2.66 | 0.0013 | 0.0048 | 0.047 | | | | | |
| 38 | 0.070 | 0.24 | 1.61 | 0.076 | 0.009 | 0.0006 | 2.51 | 0.0015 | 0.0047 | 0.052 | 0.02 | | | | 0.008 |
| 39 | 0.074 | 0.25 | 1.83 | 0.077 | 0.004 | 0.0003 | 2.51 | 0.0017 | 0.0040 | 0.049 | 0.01 | 0.02 | 0.14 | | 0.008 |
| 40 | 0.082 | 0.26 | 1.34 | 0.068 | 0.009 | 0.0003 | 2.57 | 0.0038 | 0.0044 | 0.033 | 0.02 | 0.05 | 0.15 | | 0.008 |
| 41 | 0.075 | 0.20 | 1.80 | 0.048 | 0.007 | 0.0008 | 2.55 | 0.0014 | 0.0048 | 0.050 | 0.02 | | 0.15 | | 0.008 |
| 42 | 0.093 | 0.36 | 2.16 | 0.066 | 0.005 | 0.0010 | 1.81 | 0.0019 | 0.0045 | 0.053 | 0.02 | 0.08 | | | 0.008 |
| 43 | 0.088 | 0.39 | 1.96 | 0.063 | 0.004 | 0.0017 | 1.44 | 0.0009 | 0.0041 | 0.057 | 0.02 | | 0.14 | 0.003 | 0.010 |
| 44 | 0.054 | 0.25 | 1.24 | 0.038 | 0.005 | 0.0005 | 2.37 | 0.0032 | 0.0040 | 0.047 | 0.22 | | 0.28 | | 0.008 |
| 45 | 0.076 | 0.20 | 1.80 | 0.068 | 0.005 | 0.0005 | 2.86 | 0.0012 | 0.0050 | 0.065 | 0.05 | 0.24 | 0.15 | | 0.008 |
| 46 | 0.045 | 0.36 | 2.35 | 0.072 | 0.004 | 0.0003 | 2.85 | 0.0012 | 0.0055 | 0.049 | 0.02 | 0.75 | 0.18 | 0.008 | 0.008 |
| 47 | 0.084 | 0.38 | 1.98 | 0.072 | 0.005 | 0.0022 | 2.38 | 0.0016 | 0.0046 | 0.041 | 0.33 | 0.10 | 0.05 | | 0.009 |
| 48 | 0.098 | 0.27 | 1.15 | 0.051 | 0.005 | 0.0005 | 3.33 | 0.0006 | 0.0047 | 0.051 | 0.02 | 0.08 | 0.22 | | 0.008 |
| 49 | 0.065 | 0.36 | 1.99 | 0.055 | 0.002 | 0.0054 | 2.63 | 0.0015 | 0.0048 | 0.054 | 0.15 | 0.08 | 0.10 | | 0.014 |
| 50 | 0.095 | 0.36 | 1.68 | 0.052 | 0.008 | 0.0069 | 1.15 | 0.0016 | 0.0042 | 0.048 | 0.01 | 0.25 | 0.05 | 0.012 | 0.009 |

Table 6 continued

| No. | Oxides | | | Rate of AF Formation (%) | Low-Temperature Toughness | | Welding Workability |
|---|---|---|---|---|---|---|---|
| | $Al_2O_3+SiO_2+$ $MnO+TiO_2+CaO$ | $(TiO_2+MnO+$ $Al_2O_3+CaO)/SiO_2$ | $CaO/SiO_2$ | | $vE_{-60}$ (J) | Brittle Fracture Rate (%) | |
| 36 | 95 | 11 | 2.1 | 24 | 72 | 15 | passed |
| 37 | 93 | 18 | 2.6 | 25 | 66 | 23 | passed |
| 38 | 93 | 15 | 2.5 | 17 | 90 | 13 | passed |
| 39 | 94 | 18 | 0.8 | 24 | 70 | 10 | passed |
| 40 | 95 | 11 | 0.6 | 18 | 71 | 22 | passed |
| 41 | 95 | 23 | 1.5 | 20 | 76 | 8 | passed |
| 42 | 95 | 11 | 1.5 | 33 | 71 | 15 | passed |
| 43 | 97 | 9 | 1.6 | 31 | 68 | 22 | passed |
| 44 | 73 | 7 | 1.0 | 16 | 65 | 27 | passed |
| 45 | 82 | 20 | 1.5 | 22 | 63 | 25 | passed |
| 46 | 97 | 11 | 0.5 | 33 | 60 | 32 | passed |
| 47 | 99 | 9 | 1.1 | 27 | 64 | 25 | passed |
| 48 | 92 | 11 | 1.9 | 24 | 62 | 23 | passed |
| 49 | 96 | 8 | 2.6 | 35 | 61 | 23 | passed |
| 50 | 98 | 10 | 2.8 | 15 | 62 | 30 | passed |

Table 6 continued

| No. | C | Si | Mn | Ti | Al | Ca | Ni | B | N | O | Cu | Cr | Mo | Nb | V |
|---|---|---|---|---|---|---|---|---|---|---|---|---|---|---|---|
| 51 | 0.074 | 0.33 | 1.81 | 0.075 | 0.003 | 0.0011 | 2.34 | 0.0016 | 0.0075 | 0.045 | 0.01 | 0.85 | | | 0.006 |
| 52 | 0.011 | 0.48 | 1.77 | 0.051 | 0.003 | 0.0026 | 2.47 | 0.0054 | 0.0041 | 0.052 | 0.01 | | 0.02 | | 0.022 |
| 53 | 0.076 | 0.51 | 1.91 | 0.094 | 0.006 | 0.0005 | 2.23 | 0.0018 | 0.0036 | 0.048 | 0.01 | 0.02 | 0.13 | | 0.010 |
| 54 | 0.067 | 0.23 | 1.52 | 0.120 | 0.021 | 0.0005 | 2.47 | 0.0020 | 0.0049 | 0.057 | 0.01 | 0.02 | 0.01 | | 0.008 |
| 55 | 0.075 | 0.35 | 1.92 | 0.076 | 0.006 | 0 | 2.47 | 0.0018 | 0.0037 | 0.052 | 0.01 | 0.02 | 0.14 | | 0.009 |
| 56 | 0.125 | 0.35 | 1.56 | 0.066 | 0.005 | 0.0007 | 2.47 | 0.0019 | 0.0041 | 0.049 | 0.02 | | 0.15 | | 0.007 |
| 57 | 0.074 | 0.18 | 1.85 | 0.025 | 0.005 | 0.0003 | 2.68 | 0.0003 | 0.0044 | 0.053 | 0.01 | | 0.15 | | 0.008 |
| 58 | 0.068 | 0.12 | 1.76 | 0.077 | 0.006 | 0.0003 | 0.85 | 0.0019 | 0.0045 | 0.055 | 0.02 | | 0.15 | | 0.008 |
| 59 | 0.074 | 0.39 | 1.90 | 0.070 | 0.005 | 0.0056 | 3.72 | 0.0018 | 0.0042 | 0.045 | 0.01 | | 0.14 | | 0.009 |
| 60 | 0.074 | 0.25 | 0.90 | 0.041 | 0.007 | 0.0009 | 2.33 | 0.0016 | 0.0049 | 0.055 | 0.01 | | 0.15 | | 0.008 |
| 61 | 0.077 | 0.48 | 1.88 | 0.061 | 0.006 | 0.0003 | 2.34 | 0.0018 | 0.0050 | 0.056 | 0.01 | | 0.15 | | 0.008 |
| 63 | 0.055 | 0.48 | 1.16 | 0.020 | 0.006 | 0.0005 | 2.21 | 0.0020 | 0.0046 | 0.049 | 0.01 | 0.05 | | | 0.008 |
| 64 | 0.095 | 0.26 | 1.55 | 0.055 | 0.004 | 0.0005 | 2.33 | 0.0004 | 0.0048 | 0.046 | 0.02 | | 0.15 | | 0.008 |
| 65 | 0.091 | 0.35 | 1.71 | 0.046 | 0.004 | 0.0005 | 0.75 | 0.0015 | 0.0044 | 0.050 | 0.01 | | 0.06 | | 0.009 |

Table 6 continued

| No. | Oxides | | | Rate of AF Formation (%) | Low-Temperature Toughness | | Welding Workability |
|---|---|---|---|---|---|---|---|
| | $Al_2O_3+SiO_2+MnO+TiO_2+CaO$ | $(TiO_2+MnO+Al_2O_3+CaO)/SiO_2$ | $CaO/SiO_2$ | | $vE_{-60}$ (J) | Brittle Fracture Rate (%) | |
| 51 | 95 | 11 | 1.9 | 29 | 65 | 22 | passed |
| 52 | 98 | 4 | 1.1 | 32 | 55 | 35 | passed |
| 53 | 92 | 4 | 0.9 | 27 | 55 | 33 | passed |
| 54 | 97 | 23 | 3.0 | 11 | 27 | 65 | passed |
| 55 | 96 | 11 | 0.0 | 30 | 50 | 35 | passed |
| 56 | 99 | 9 | 2.0 | 27 | 32 | 50 | passed |
| 57 | 98 | 32 | 2.7 | 13 | 58 | 35 | failed |
| 58 | 92 | 30 | 2.7 | 13 | 62 | 40 | failed |
| 59 | 98 | 15 | 3.2 | 14 | 41 | 42 | passed |
| 60 | 97 | 7 | 1.7 | 28 | 66 | 35 | passed |
| 61 | 98 | 4 | 0.3 | 26 | 56 | 37 | passed |
| 63 | 90 | 4 | 1.3 | 12 | 37 | 62 | passed |
| 64 | 89 | 10 | 1.4 | 21 | 60 | 35 | passed |
| 65 | 88 | 10 | 1.3 | 10 | 60 | 35 | passed |

The weld metals of Examples 36 to 51 satisfying: Si: from 0.20 to 0.50 mass%; Mn: from 1.00 to 2.40 mass%; and Ti: from 0.030 to 0.090 mass%, and containing both of Ni: from 1.00 to 3.50 mass% and B: from 0.0005 to 0.0070 mass%, in which the average composition of oxide-based inclusions having a minor diameter of 1 $\mu$m or more contained in the weld metal satisfied CaO/SiO$_2$: from 0.50 to 3.0 and the rate of acicular ferrite formation was 15% or more, were obtained by use of a wire satisfying: Mn: from 1.1 to 3.4 mass%; and Ti in terms of Ti in Ti alloy and Ti compound: from 2.4 to 4.0 mass% and containing both of Ni: from 1.00 to 3.50 mass%; and B: from 0.0008 to 0.012 mass%, and had an absorption energy at -60°C and a brittle fracture rate, as the average value of three measurements, of 60 J or more and 33% or less, respectively, as well as particularly excellent low-temperature toughness. Furthermore, in all of Examples 36 to 51, the welding workability was good.

Examples 66 to 89 below are examples for describing the effects of the second embodiment.

(Examples 66 to 89)

Flux-cored wires of Examples 66 to 89 having the chemical component composition shown in Table 7 below were manufactured with a wire diameter: 1.2 mm at a flux filling rate of 13.5%. In Table 7, Amount in Terms of Si indicates the amount in terms of Si in an Si alloy and an Si compound, and Amount in Terms of Ti indicates the amount in terms of Ti in a Ti alloy and a Ti compound.

Table 7

| No. | C | Amount in Terms of Si | Mn | Amount in Terms of Ti | Al | Ca | Ni | Mo | Cu | Cr | Nb | V | B | $ZrO_2$ | $Al_2O_3$ | Li+ K+Na | Mg | F | Fe and Impurity | (Ti+Mn+ Al+Ca)/Si | Ca/Si |
|---|---|---|---|---|---|---|---|---|---|---|---|---|---|---|---|---|---|---|---|---|---|
| 66 | 0.06 | 0.34 | 3.0 | 3.8 | 0.010 | 0.065 | 2.4 | 0.7 | | | | | | | | | | | 89.6 | 20.2 | 0.19 |
| 67 | 0.09 | 0.25 | 2.9 | 2.6 | 0.014 | 0.065 | 2.3 | 0.6 | 0.02 | | | 0.006 | | 0.25 | 0.31 | 0.10 | | | 90.5 | 22.3 | 0.26 |
| 68 | 0.10 | 0.36 | 3.0 | 3.4 | 0.017 | 0.033 | 2.2 | 0.6 | 0.02 | | | | 0.0012 | 0.17 | 0.34 | | 0.35 | | 89.4 | 17.9 | 0.09 |
| 69 | 0.05 | 0.28 | 1.9 | 3.9 | 0.034 | 0.080 | 3.3 | 0.9 | 0.02 | | 0.014 | 0.007 | 0.0075 | 0.44 | 0.33 | 0.11 | 0.33 | 0.21 | 88.1 | 21.1 | 0.29 |
| 70 | 0.06 | 0.38 | 2.8 | 2.7 | 0.034 | 0.130 | 1.7 | 0.5 | 0.02 | 0.50 | | 0.010 | 0.0095 | 0.31 | 0.33 | 0.09 | 0.33 | 0.16 | 89.9 | 14.9 | 0.34 |
| 71 | 0.08 | 0.29 | 3.4 | 3.3 | 0.048 | 0.065 | 1.1 | 0.8 | 0.03 | | | 0.007 | 0.0030 | 0.25 | 0.33 | 0.08 | 0.34 | 0.22 | 89.7 | 23.5 | 0.22 |
| 72 | 0.11 | 0.52 | 3.0 | 3.2 | 0.021 | 0.088 | 2.2 | 0.6 | 0.06 | | 0.008 | 0.010 | 0.0027 | 0.44 | 0.08 | 0.09 | 0.21 | 0.24 | 89.1 | 12.1 | 0.17 |
| 73 | 0.04 | 0.28 | 1.7 | 3.3 | 0.020 | 0.038 | 2.2 | 0.7 | 0.19 | 0.23 | | 0.010 | 0.0048 | 0.25 | 0.33 | 0.15 | 0.47 | 0.21 | 89.9 | 18.1 | 0.14 |
| 74 | 0.10 | 0.11 | 2.6 | 2.7 | 0.013 | 0.033 | 2.2 | 0.6 | 0.02 | 0.85 | | 0.008 | 0.0007 | 0.25 | 0.25 | 0.36 | 0.50 | 0.20 | 89.2 | 48.6 | 0.30 |
| 75 | 0.10 | 0.18 | 2.5 | 2.5 | 0.009 | 0.040 | 2.2 | 0.9 | 0.02 | 0.02 | | 0.011 | 0.0004 | 0.08 | 0.33 | 0.11 | 0.72 | 0.15 | 90.1 | 28.1 | 0.22 |
| 76 | 0.09 | 0.16 | 2.5 | 2.8 | 0.015 | 0.045 | 2.0 | 1.2 | 0.02 | 0.02 | | 0.009 | 0.0007 | 0.41 | 0.55 | 0.08 | 0.31 | 0.58 | 89.2 | 33.5 | 0.28 |
| 77 | 0.10 | 0.29 | 2.7 | 2.6 | 0.014 | 0.048 | 2.4 | 0.6 | 0.02 | 0.03 | | 0.006 | 0.0016 | 0.48 | 0.40 | 0.03 | 0.28 | 0.26 | 89.7 | 18.5 | 0.17 |
| 78 | 0.07 | 0.30 | 2.9 | 2.8 | 0.015 | 0.062 | 2.3 | 0.4 | 0.01 | 0.03 | | 0.006 | 0.0018 | 0.13 | 0.21 | 0.22 | 0.30 | 0.35 | 89.9 | 19.3 | 0.21 |

| No. | C | Amount in Terms of Si | Mn | Amount in Terms of Ti | Al | Ca | Ni | Mo | Cu | Cr | Nb | V | B | ZrO₂ | Al₂O₃ | Li+K+Na | Mg | F | Fe and Impurity | (Ti+Mn+Al+Ca)/Si | Ca/Si |
|---|---|---|---|---|---|---|---|---|---|---|---|---|---|---|---|---|---|---|---|---|---|
| 79 | 0.07 | 0.26 | 2.5 | 3.4 | 0.011 | 0.065 | 2.2 | 1.3 | 0.01 | 0.01 | | 0.004 | 0.0007 | 0.37 | 0.36 | 0.05 | 0.32 | 0.31 | 88.8 | 23.0 | 0.25 |
| 80 | 0.03 | 0.61 | 3.0 | 2.9 | 0.009 | 0.077 | 2.2 | 0.6 | 0.02 | | | 0.008 | 0.0026 | 0.21 | 0.15 | 0.10 | 0.25 | 0.25 | 89.6 | 9.8 | 0.13 |
| 81 | 0.09 | 0.26 | 3.8 | 4.2 | 0.019 | 0.030 | 1.9 | 0.6 | 0.02 | | | 0.010 | 0.0021 | 0.25 | 0.33 | 0.12 | 0.28 | 0.22 | 87.9 | 31.0 | 0.12 |
| 82 | 0.15 | 0.35 | 2.4 | 2.2 | 0.019 | 0.072 | 2.1 | 0.6 | 0.02 | 0.02 | | 0.008 | 0.0030 | 0.24 | 0.33 | 0.03 | 0.30 | 0.25 | 90.9 | 13.4 | 0.21 |
| 83 | 0.10 | 0.29 | 2.8 | 3.4 | 0.028 | 0 | 2.2 | 0.6 | 0.02 | | | 0.009 | 0.0017 | 0.25 | 0.34 | 0.08 | 0.31 | 0.24 | 89.3 | 21.5 | 0.00 |
| 84 | 0.10 | 0.31 | 2.5 | 2.7 | 0.036 | 0.065 | 0.8 | 0.5 | 0.03 | 0.02 | | 0.009 | 0.0020 | 0.19 | 0.33 | 0.09 | 0.33 | 0.16 | 91.8 | 17.1 | 0.21 |
| 85 | 0.10 | 0.24 | 2.7 | 2.9 | 0.038 | 0.044 | 3.6 | 0.5 | 0.02 | 0.21 | | 0.009 | 0.0006 | 0.30 | 0.20 | 0.22 | 0.33 | 0.18 | 88.4 | 23.7 | 0.18 |
| 86 | 0.10 | 0.11 | 2.9 | 2.8 | 0.032 | 0.098 | 2.2 | 0.5 | 0.04 | | | 0.008 | 0.0014 | 0.18 | 0.18 | 0.08 | 0.28 | 0.25 | 90.2 | 53.0 | 0.89 |
| 87 | 0.10 | 0.50 | 3.0 | 3.4 | 0.012 | 0.031 | 2.2 | 0.5 | 0.03 | | | 0.010 | 0.0020 | 0.24 | 0.51 | 0.06 | 0.30 | 0.11 | 89.0 | 12.9 | 0.06 |
| 88 | 0.10 | 0.51 | 2.2 | 2.6 | 0.013 | 0.052 | 3.1 | 0.5 | 0.03 | | | 0.011 | 0.0015 | 0.37 | 0.57 | 0.08 | 0.15 | 0.18 | 89.5 | 9.5 | 0.10 |
| 89 | 0.09 | 0.14 | 1.8 | 2.5 | 0.011 | 0.040 | 2.6 | 0.7 | 0.01 | | | 0.006 | 0.0013 | 0.33 | 0.55 | 0.08 | 0.41 | 0.25 | 90.5 | 31.1 | 0.29 |

A 20° V groove was formed in an SM490A steel sheet having a thickness of 20 mm, and gas-shielded arc welding was performed under the following conditions by using a flux-cored wire of each of Examples.

Shielding gas: A 20% $CO_2$-80% Ar mixed gas

Polarity: DCEP (direct current electrode positive)

Current-voltage-speed: 280 A-29 V-35 cpm

Heat input: 1.4 kJ/mm

Preheating temperature: 100°C-110°C

Interpass temperature: 140°C-160°C

Buildup procedure: 7 layers, 14 passes

Welding position: flat

The chemical component composition of the obtained weld metal according to each of Examples is shown in Table 8. The remainder of each weld metal consists of iron and inevitable impurities. In addition, the average composition of oxide-based inclusions having a minor diameter of 1 $\mu$m or more contained in the weld metal according to each of Examples, and with respect to the average composition, $Al_2O_3$+$SiO_2$+MnO+$TiO_2$+CaO, ($TiO_2$+MnO+$Al_2O_3$+CaO)/$SiO_2$ and CaO/$SiO_2$ are shown in Table 8. The remainder of the average composition of oxide-based inclusions having a minor diameter of 1 $\mu$m or more contained in the weld metal according to each of Examples consists of inevitable oxides and inevitable fluorides. Furthermore, the average composition of oxide-based inclusions having a minor diameter of 1 $\mu$m or more contained in the weld metal according to each of Examples was quantitatively analyzed by observing a polished surface of a micro sample, which was cut out from the weld metal, by means of an Electron Probe X-ray Micro Analyzer (EPMA, trade named: "JXA-8500F") manufactured by JEOL Datum Ltd. Details are as follows. The observation area at the polished surface of the micro sample was set to be 100 mm$^2$, and the composition in the central part of an inclusion was quantitatively analyzed by characteristic X-ray wavelength dispersion spectrometry. Elements to be analyzed were Al, Si, Ti, Mg, Mn, Zr, Na, K, Cr and O (oxygen). After the relationship between the X-ray intensity of each element and the concentration of the element was previously determined as a calibration curve by using a known substance, the elements contained in each inclusion were quantitatively determined from the obtained X-ray intensity of the inclusion above to be analyzed and the calibration curve, and the composition of the inclusion was determined by arithmetic averaging of the results. Out of inclusions quantitatively determined in this way, an inclusion having an oxygen (O) content of 5 mass% or more is defined as an oxide-based inclusion. At this time, when a plurality of elements are observed in one oxide-based inclusion, the oxide composition was calculated from the ratio of the X-ray intensities showing existence of those elements by performing conversion to a single oxide of each element. In the present invention, values converted to mass as the above-described single oxides were averaged to determine the composition of oxides.

In addition, the rate of acicular ferrite formation in the weld metal was measured as follows. First, the weld metal was cut at a surface perpendicular to the welding direction and etched with nital (nitric acid:ethanol=5:95). Subsequently, a range of 165 $\mu$m×219 $\mu$m of the unmodified portion of the final pass was photographed by an optical microscope at a magnification of 400 in four visual fields and out of inclusion particles on the photograph, those having an equivalent-circle diameter of 1.5 $\mu$m or more were selected. Then, a structure extended radially from an inclusion particle was defined as acicular ferrite, and the rate of acicular ferrite formation (%) was measured based on the following formula:

$$\text{Rate of acicular ferrite formation (\%)} = (\text{number of inclusions acting as a start point of acicular ferrite/number of all inclusions}) \times 100$$

With respect to the obtained weld metal, various performances (strength, low-temperature toughness) were evaluated by the following evaluation tests. The evaluations results are shown in Table 8.

(Strength)

A tensile test piece in conformity with JIS Z2202 was sampled from the central part of the weld metal in parallel to the weld line and subjected to a tensile test, and those having a tensile strength in excess of 870 MPa were judged to be Passed.

(Low-Temperature Toughness)

With respect to the obtained weld metal, the low-temperature toughness was evaluated by the following evaluation test.

More specifically, a Charpy impact test piece (JIS Z3111 No. 4 V-notched specimen) was sampled vertically to the weld line direction from a thickness central part of the weld metal and measured for the energy absorption at -60°C

(vE-$_{60}$) and the brittle fracture rate in a manner prescribed in JIS Z2242. The evaluation results are shown in Table 8. Those having, as the average value of three measurements, an absorption energy at -60°C of 35 J or more and a brittle fracture rate of less than 33% were rated as having excellent low-temperature toughness.

Table 8

| No. | C | Si | Mn | Ti | Al | Ca | Ni | Mo | N | O | Cu | Cr | Nb | V | B |
|---|---|---|---|---|---|---|---|---|---|---|---|---|---|---|---|
| 66 | 0.061 | 0.33 | 2.15 | 0.071 | 0.004 | 0.0004 | 2.65 | 0.71 | 0.0046 | 0.048 | | | | | |
| 67 | 0.094 | 0.26 | 1.95 | 0.050 | 0.004 | 0.0004 | 2.51 | 0.55 | 0.0045 | 0.049 | 0.02 | | | 0.008 | |
| 68 | 0.098 | 0.30 | 1.96 | 0.066 | 0.005 | 0.0003 | 2.46 | 0.50 | 0.0045 | 0.048 | 0.01 | | | | 0.0011 |
| 69 | 0.063 | 0.25 | 1.56 | 0.085 | 0.008 | 0.0010 | 3.22 | 0.85 | 0.0045 | 0.066 | 0.01 | | 0.012 | 0.008 | 0.0038 |
| 70 | 0.066 | 0.32 | 1.90 | 0.051 | 0.008 | 0.0048 | 2.00 | 0.51 | 0.0078 | 0.032 | 0.02 | 0.51 | | 0.008 | 0.0044 |
| 71 | 0.085 | 0.28 | 2.33 | 0.065 | 0.009 | 0.0005 | 1.13 | 0.78 | 0.0046 | 0.049 | 0.02 | | | 0.008 | 0.0021 |
| 72 | 0.108 | 0.39 | 2.05 | 0.059 | 0.005 | 0.0010 | 2.46 | 0.62 | 0.0045 | 0.055 | 0.05 | | 0.008 | 0.008 | 0.0015 |
| 73 | 0.054 | 0.26 | 1.48 | 0.041 | 0.005 | 0.0003 | 2.45 | 0.75 | 0.0041 | 0.047 | 0.21 | 0.21 | | 0.008 | 0.0028 |
| 74 | 0.095 | 0.12 | 1.88 | 0.042 | 0.004 | 0.0003 | 2.50 | 0.61 | 0.0039 | 0.048 | 0.01 | 0.81 | | 0.008 | 0.0004 |
| 75 | 0.093 | 0.11 | 1.91 | 0.038 | 0.004 | 0.0004 | 2.43 | 0.94 | 0.0027 | 0.051 | 0.01 | 0.02 | | 0.010 | 0.0008 |
| 76 | 0.092 | 0.11 | 1.82 | 0.044 | 0.004 | 0.0004 | 2.25 | 1.16 | 0.0032 | 0.052 | 0.01 | 0.02 | | 0.010 | 0.0008 |
| 77 | 0.100 | 0.26 | 2.01 | 0.054 | 0.004 | 0.0004 | 2.58 | 0.61 | 0.0051 | 0.048 | 0.01 | 0.02 | | 0.008 | 0.0011 |
| 78 | 0.077 | 0.26 | 1.92 | 0.055 | 0.004 | 0.0004 | 2.55 | 0.39 | 0.0044 | 0.048 | 0.02 | 0.01 | | 0.008 | 0.0012 |

Table 8 continued

| No. | Oxide | | | Rate of AF Formation (%) | Low-Temperature Toughness | | TS [MPa] |
|---|---|---|---|---|---|---|---|
| | $Al_2O_3+SiO_2+MnO+TiO_2+CaO$ | $(TiO_2+MnO+Al_2O_3+CaO)/SiO_2$ | $CaO/SiO_2$ | | $vE_{-60}(J)$ | Brittle Fracture Rate (%) | |
| 66 | 95 | 11 | 0.6 | 20 | 70 | 0 | 925 |
| 67 | 87 | 14 | 0.7 | 26 | 65 | 0 | 940 |
| 68 | 97 | 13 | 0.6 | 20 | 68 | 0 | 919 |
| 69 | 94 | 11 | 0.6 | 30 | 38 | 32 | 934 |
| 70 | 93 | 15 | 3.0 | 18 | 60 | 22 | 930 |
| 71 | 97 | 13 | 0.7 | 17 | 45 | 23 | 940 |
| 72 | 97 | 5 | 0.7 | 28 | 39 | 25 | 1010 |
| 73 | 94 | 18 | 0.8 | 26 | 60 | 27 | 875 |
| 74 | 94 | 23 | 3.0 | 18 | 63 | 23 | 908 |
| 75 | 76 | 37 | 2.5 | 25 | 41 | 0 | 951 |
| 76 | 96 | 31 | 1.7 | 22 | 40 | 13 | 989 |
| 77 | 93 | 15 | 0.8 | 30 | 50 | 17 | 956 |
| 78 | 95 | 15 | 1.0 | 23 | 66 | 17 | 874 |

Table 8 continued

| No. | C | Si | Mn | Ti | Al | Ca | Ni | Mo | N | O | Cu | Cr | Nb | V | B |
|---|---|---|---|---|---|---|---|---|---|---|---|---|---|---|---|
| 79 | 0.076 | 0.26 | 1.91 | 0.049 | 0.003 | 0.0005 | 2.50 | 1.29 | 0.0048 | 0.048 | 0.01 | 0.01 | | 0.002 | 0.0008 |
| 80 | 0.044 | 0.45 | 1.95 | 0.055 | 0.004 | 0.0008 | 2.50 | 0.58 | 0.0046 | 0.051 | 0.01 | | | 0.008 | 0.0016 |
| 81 | 0.088 | 0.25 | 2.46 | 0.098 | 0.005 | 0.0003 | 2.15 | 0.55 | 0.0045 | 0.046 | 0.01 | | | 0.010 | 0.0012 |
| 82 | 0.130 | 0.28 | 1.76 | 0.028 | 0.006 | 0.0006 | 2.41 | 0.60 | 0.0050 | 0.052 | 0.01 | 0.02 | | 0.010 | 0.0018 |
| 83 | 0.088 | 0.26 | 1.95 | 0.066 | 0.007 | 0 | 2.41 | 0.60 | 0.0040 | 0.040 | 0.01 | | | 0.008 | 0.0010 |
| 84 | 0.090 | 0.28 | 1.80 | 0.046 | 0.008 | 0.0006 | 0.85 | 0.46 | 0.0048 | 0.043 | 0.02 | 0.02 | | 0.007 | 0.0012 |
| 85 | 0.095 | 0.22 | 2.05 | 0.050 | 0.008 | 0.0004 | 3.62 | 0.45 | 0.0045 | 0.052 | 0.02 | 0.22 | | 0.008 | 0.0008 |
| 86 | 0.095 | 0.11 | 2.03 | 0.056 | 0.008 | 0.0016 | 2.46 | 0.53 | 0.0041 | 0.047 | 0.02 | | | 0.008 | 0.0012 |
| 87 | 0.096 | 0.38 | 1.95 | 0.055 | 0.004 | 0.0003 | 2.41 | 0.45 | 0.0048 | 0.046 | 0.02 | | | 0.009 | 0.0013 |
| 88 | 0.098 | 0.37 | 1.55 | 0.044 | 0.005 | 0.0006 | 3.33 | 0.45 | 0.0050 | 0.056 | 0.02 | | | 0.008 | 0.0010 |
| 89 | 0.092 | 0.14 | 1.44 | 0.038 | 0.004 | 0.0003 | 2.88 | 0.70 | 0.0044 | 0.059 | 0.02 | | | 0.008 | 0.0011 |

Table 8 continued

| No. | Oxide | | | Rate of AF Formation (%) | Low-Temperature Toughness | | TS [MPa] |
|---|---|---|---|---|---|---|---|
| | $Al_2O_3+SiO_2+MnO+TiO_2+CaO$ | $(TiO_2+MnO+Al_2O_3+CaO)/SiO_2$ | $CaO/SiO_2$ | | $vE_{-60}(J)$ | Brittle Fracture Rate (%) | |
| 79 | 96 | 18 | 0.8 | 26 | 44 | 30 | 1021 |
| 80 | 92 | 4 | 0.6 | 24 | 51 | 37 | 821 |
| 81 | 89 | 17 | 0.8 | 25 | 25 | 40 | 1025 |
| 82 | 90 | 8 | 0.6 | 14 | 15 | 67 | 1011 |
| 83 | 94 | 12 | 0.0 | 25 | 38 | 37 | 922 |
| 84 | 93 | 11 | 0.8 | 27 | 85 | 0 | 831 |
| 85 | 94 | 23 | 1.0 | 23 | 33 | 20 | 985 |
| 86 | 94 | 46 | 3.5 | 14 | 48 | 33 | 907 |
| 87 | 91 | 7 | 0.4 | 21 | 37 | 40 | 915 |
| 88 | 79 | 4 | 0.6 | 28 | 37 | 35 | 900 |
| 89 | 69 | 13 | 0.6 | 11 | 47 | 40 | 893 |

In Example 80, the C amount in the wire was as low as 0.03%, the C amount in the weld metal was also as low as 0.044% and therefore, the strength was low. Furthermore, the Si amount in the wire was as high as 0.61%, (Ti+Mn+Al+Ca)/Si in the wire was as low as 9.8, the Si amount in the weld metal was as high as 0.45%, $(TiO_2+MnO+Al_2O_3+CaO)/SiO_2$ in the average composition of oxide-based inclusions having a minor diameter of 1 $\mu$m or more contained in the weld metal was as low as 4, and therefore, the low-temperature toughness was poor.

In Example 81, the Mn amount in the wire was as high as 3.8%, the Ti amount in the wire was as high as 4.2%, the Mn amount in the weld metal was as high as 2.46%, the Ti amount in the weld metal was as high as 0.098%, and therefore, the low-temperature toughness was poor.

In Example 82, the C amount in the wire was as low as 0.15%, the Ti amount in the wire was as low as 2.2%, the C amount in the weld metal was as low as 0.130%, the Ti amount in the weld metal was as low as 0.028%, and rate of acicular ferrite formation in the weld metal was as low as 14% and therefore, the low-temperature toughness was poor.

In Example 83, Ca was not contained in the wire, Ca/Si in the wire was 0, Ca was not contained in the weld metal, and $CaO/SiO_2$ in the average composition of oxide-based inclusions having a minor diameter of 1 $\mu$m or more contained in the weld metal was 0 and therefore, the low-temperature toughness was poor.

In Example 84, the Ni amount in the wire was as low as 0.8%, the Ni amount in the weld metal was as low as 0.85% and therefore, the strength was low.

In Example 85, the Ni amount in the wire was as high as 3.6%, the Ni amount in the weld metal was as high as 3.62% and therefore, the low-temperature toughness was poor.

In Example 86, Ca/Si in the wire was as high as 0.89, the Ca amount in the weld metal was as high as 0.0016%, $(TiO_2+MnO+Al_2O_3+CaO)/SiO_2$ in the average composition of oxide-based inclusions having a minor diameter of 1 $\mu$m or more contained in the weld metal was as low as 4, the rate of acicular ferrite formation in the weld metal was as low as 14% and therefore, the low-temperature toughness was poor.

In Example 87, Ca/Si in the wire was as low as 0.06, $CaO/SiO_2$ in the average composition of oxide-based inclusions having a minor diameter of 1 $\mu$m or more contained in the weld metal was as low as 0.04 and therefore, the low-temperature toughness was poor.

In Example 88, (Ti+Mn+Al+Ca)/Si in the wire was as high as 9.5, $(TiO_2+MnO+Al_2O_3+CaO)/SiO_2$ in the average composition of oxide-based inclusions having a minor diameter of 1 $\mu$m or more contained in the weld metal was as low as 4 and therefore, the low-temperature toughness was poor.

In Example 89, $Al_2O_3+SiO_2+MnO+TiO_2+CaO$ in the average composition of oxide-based inclusions having a minor diameter of 1 $\mu$m or more contained in the weld metal was as low as 69% and therefore, the low-temperature toughness was poor.

On the other hand, the weld metals of Examples 66 to 79 had high strength as well as excellent low-temperature toughness.

While the invention has been described in detail and with reference to specific embodiments thereof, it is apparent to one skilled in the art that various changes and modifications can be made therein without departing from the spirit and scope of the invention. This application is based on Japanese Patent Application (Patent Application No. 2016-174094) filed on September 6, 2016, the entirety of which is incorporated herein by way of reference. In addition, all references cited herein are incorporated in their entirety.

**Claims**

1. A flux-cored wire for gas-shielded arc welding, containing, based on total mass of the wire:

   C: from 0.03 to 0.12 mass%;
   Si in terms of Si in Si alloy and Si compound: from 0.20 to 0.70 mass%;
   Mn: from 1.0 to 4.0 mass%;
   Ti in terms of Ti in Ti alloy and Ti compound: from 2.4 to 4.5 mass%;
   Al: from 0.005 to 0.050 mass%;
   Ca: from 0.03 to 1.0 mass%;
   at least one of Ni: from 0.30 to 3.50 mass% and B: from 0.0008 to 0.012 mass%; and
   Fe: 80 mass% or more, and
   satisfying:

   (Ti+Mn+Al+Ca)/Si$\geq$12; and
   Ca/Si: from 0.07 to 0.35.

2. The flux-cored wire for gas-shielded arc welding according to Claim 1, further containing, based on the total mass

of the wire:

$ZrO_2$: from 0.02 to 0.50 mass%; and
$Al_2O_3$: from 0.02 to 0.80 mass%.

3. The flux-cored wire for gas-shielded arc welding according to Claim 1, further containing at least one member selected from the group consisting of, based on the total mass of the wire:

Cu: 0.40 mass% or less;
Cr: 1.0 mass% or less;
Mo: 0.35 mass% or less:

Nb: 0.030 mass% or less; and
V: 0.050 mass% or less.

4. The flux-cored wire for gas-shielded arc welding according to Claim 1, further containing, based on the total mass of the wire:
a total of Li, Na and K: 1.0 mass% or less.

5. The flux-cored wire for gas-shielded arc welding according to Claim 1, further containing, based on total mass of the wire:
Mg: 1.0 mass% or less.

6. The flux-cored wire for gas-shielded arc welding according to Claim 1, further containing, based on the total mass of the wire:
F: 1.0 mass% or less.

7. The flux-cored wire for gas-shielded arc welding according to any one of Claims 1 to 6, satisfying:

Mn: from 1.1 to 3.4 mass%; and
Ti in terms of Ti in Ti alloy and Ti compound: from 2.4 to 4.0 mass%, and
containing both of Ni: from 1.00 to 3.50 mass% and B: from 0.0008 to 0.012 mass%.

8. A weld metal containing:

C: from 0.04 to 0.12 mass%;
Si: from 0.10 to 0.50 mass%;
Mn: from 0.80 to 3.00 mass%;
Ti: from 0.030 to 0.100 mass%;
Al: from 0.002 to 0.010 mass%;
O: from 0.030 to 0.070 mass%;
N: more than 0 and 0.01 mass% or less;
Ca: from 0.0003 to 0.01 mass%; and
at least one of Ni: from 0.30 to 3.50 mass% and B: from 0.0005 to 0.0070 mass%,
with the remainder consisting of Fe and inevitable impurities,
wherein an average composition of oxide-based inclusions having a minor diameter of 1 $\mu$m or more contained in the weld metal satisfies, by mass%, the following requirements (1) to (3):

$$Al_2O_3+SiO_2+MnO+TiO_2+CaO \geq 70\% \qquad (1)$$

$$(TiO_2+MnO+Al_2O_3+CaO)/SiO_2 \geq 5 \qquad (2)$$

$$CaO/SiO_2: \text{from 0.20 to 3.0} \qquad (3).$$

9. The weld metal according to Claim 8, further containing at least one member selected from the group consisting of:

Cu: 0.40 mass% or less;

Cr: 1.0 mass% or less;
Mo: 0.35 mass% or less;
Nb: 0.020 mass% or less; and
V: 0.050 mass% or less.

10. The weld metal according to Claim 8 or 9, satisfying:

Si: from 0.20 to 0.50 mass%;
Mn: from 1.00 to 2.40 mass%; and
Ti: from 0.030 to 0.090 mass%, and
containing both of Ni: from 1.00 to 3.50 mass% and B: from 0.0005 to 0.0070 mass%,
wherein the average composition of oxide-based inclusions having a minor diameter of 1 $\mu$m or more contained in the weld metal satisfies the following requirement (3'):

$CaO/SiO_2$: from 0.50 to 3.0         (3')

and
wherein a rate of acicular ferrite formation defined by the following formula is 15% or more:

$$\text{Rate of acicular ferrite formation (\%)} = (\text{number of inclusions acting as a start point of acicular ferrite/number of all inclusions}) \times 100.$$

11. A flux-cored wire for gas-shielded arc welding, containing, based on total mass of the wire:

C: from 0.04 to 0.12 mass%;
Si in terms of Si in Si alloy and Si compound: from 0.10 to 0.60 mass%;
Mn: from 1.5 to 3.4 mass%;
Ti in terms of Ti in Ti alloy and Ti compound: from 2.4 to 4.0 mass%;
Al: from 0.005 to 0.050 mass%;
Ca: from 0.03 to 1.0 mass%;
Ni: from 1.00 to 3.50 mass%;
Mo: from 0.35 to 1.40 mass%; and
Fe: 80 mass% or more, and
satisfying:

$(Ti+Mn+Al+Ca)/Si \geq 12$; and
Ca/Si: from 0.07 to 0.35.

12. The flux-cored wire for gas-shielded arc welding according to Claim 11, further containing, based on the total mass of the wire:

$ZrO_2$: from 0.02 to 0.50 mass%; and
$Al_2O_3$: from 0.02 to 0.80 mass%.

13. The flux-cored wire for gas-shielded arc welding according to Claim 11, further containing at least one member selected from the group consisting of, based on the total mass of the wire:

Cu: 0.40 mass% or less;
Cr: 1.0 mass% or less;
Nb: 0.030 mass% or less;
V: 0.050 mass% or less; and
B: 0.010 mass% or less.

14. The flux-cored wire for gas-shielded arc welding according to Claim 11, further containing, based on the total mass of the wire:
a total of Li, Na and K: 1.0 mass% or less.

**15.** The flux-cored wire for gas-shielded arc welding according to Claim 11, further containing, based on the total mass of the wire:
Mg: 1.0 mass% or less.

**16.** The flux-cored wire for gas-shielded arc welding according to any one of Claims 11 to 15, further containing, based on the total mass of the wire:
F: 1.0 mass% or less.

**17.** A weld metal containing:

C: from 0.05 to 0.12 mass%;
Si: from 0.05 to 0.40 mass%;
Mn: from 1.4 to 2.4 mass%;
Ti: from 0.030 to 0.090 mass%;
Al: from 0.002 to 0.010 mass%;
O: from 0.030 to 0.070 mass%;
N: more than 0 and 0.01 mass% or less;
Ca: from 0.0003 to 0.01 mass%;
Ni: from 1.00 to 3.50 mass%; and
Mo: from 0.35 to 1.40 mass%,
with the remainder consisting of Fe and inevitable impurities,
wherein an average composition of oxide-based inclusions having a minor diameter of 1 $\mu$m or more contained in the weld metal satisfies, by mass%, the following requirements (1) to (3'):

$$Al_2O_3+SiO_2+MnO+TiO_2+CaO \geq 70\% \qquad (1)$$

$$(TiO_2+MnO+Al_2O_3+CaO)/SiO_2 \geq 5 \qquad (2)$$

$$CaO/SiO_2: \text{ from } 0.50 \text{ to } 3.0 \qquad (3')$$

and
wherein a rate of acicular ferrite formation defined by the following formula is 15% or more:

$$\text{Rate of acicular ferrite formation (\%)} = (\text{number of inclusions acting as a start point of acicular ferrite/number of all inclusions}) \times 100.$$

**18.** The weld metal according to Claim 17, further containing at least one member selected from the group consisting of:

Cu: 0.40 mass% or less;
Cr: 1.0 mass% or less;
Nb: 0.020 mass% or less;
V: 0.050 mass% or less; and
B: 0.0050 mass% or less.

<table>
<tr><td colspan="2" align="center">**INTERNATIONAL SEARCH REPORT**</td><td colspan="2">International application No.<br><br>PCT/JP2017/032176</td></tr>
</table>

**A. CLASSIFICATION OF SUBJECT MATTER**
Int.Cl. B23K35/368 (2006. 01)i, B23K35/30 (2006. 01)i

According to International Patent Classification (IPC) or to both national classification and IPC

**B. FIELDS SEARCHED**

Minimum documentation searched (classification system followed by classification symbols)
Int.Cl. B23K35/368, B23K35/30, C22C38/00-38/60

Documentation searched other than minimum documentation to the extent that such documents are included in the fields searched
| | |
|---|---|
| Japanese Published Examined Utility Model Applications | 1922-1996 |
| Japanese Published Unexamined Utility Model Applications | 1971-2017 |
| Japanese Examined Utility Model Registrations | 1996-2017 |
| Japanese Registered Utility Model Specifications | 1994-2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-18012 A (NIPPON STEEL & SUMITOMO METAL CORP.) 31 January 2013, claims, paragraphs [0045], [0047], [0062], [0074]-[0097] (Family: none) | 1-18 |
| A | JP 2016-508877 A (POSCO) 24 March 2016, & US 2015/0314397 A1 & WO 2014/104731 A1 & DE 112013006287 T5 & KR 10-2014-0084654 A & CN 104903046 A | 1-18 |

☒ Further documents are listed in the continuation of Box C. ☐ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 29 November 2017 (29.11.2017) | 12 December 2017 (12.12.2017) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2017/032176 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2009-18316 A (NIPPON STEEL CORP.) 29 January 2009, (Family: none) | 1-18 |
| A | JP 2011-245519 A (KOBE STEEL, LTD.) 08 December 2011, (Family: none) | 1-18 |
| A | US 2011/0073570 A1 (NIPPON STEEL & SUMIKIN WELDING CO., LTD.) 31 March 2011, (Family: none) | 1-18 |
| A | JP 2008-68274 A (KOBE STEEL, LTD.) 27 March 2008, (Family: none) | 1-18 |

Form PCT/ISA/210 (continuation of second sheet) (January 2015)

**REFERENCES CITED IN THE DESCRIPTION**

**Patent documents cited in the description**

- JP 2000263283 A

- JP H03294093 A